# EUROPEAN PATENT APPLICATION

(11) **EP 4 661 350 A1**
(43) Date of publication of application: **10.12.2025**
(21) Application number: 24792891.4
(22) Date of filing: 01.04.2024
(51) Int. Cl.: H04L 27/26, H04L 5/00, H04W 84/12

(54) **METHOD AND DEVICE FOR TRANSMITTING A-PPDU IN WIRELESS LAN SYSTEM**

(30) Priority: 20.04.2023 KR 20230052190
(71) Applicant: LG Electronics Inc., Yeongdeungpo-gu Seoul 07336 (KR)
(72) Inventor: LIM, Dongguk, Seoul 06772 (KR); CHUN, Jinyoung, Seoul 06772 (KR); CHOI, Jinsoo, Seoul 06772 (KR); PARK, Eunsung, Seoul 06772 (KR)
(74) Representative: Plasseraud IP
(86) International application number: PCT/KR2024/004138
(87) International publication number: WO 2024/219705

(57) **Abstract**

A method and a device for transmitting an A-PPDU in a wireless LAN system are proposed. Specifically, a receiving STA receives a trigger frame from a transmitting STA. The receiving STA transmits an A-PPDU to the transmitting STA on the basis of a trigger frame. The trigger frame includes a common information field, a first and a second special user information field, and a first and a second user information list field. The A-PPDU includes a first PPDU for a primary channel and a second PPDU for a secondary channel. The first special user information field and the first user information list field are variant fields for the first PPDU. The second special user information field and the second user information list field are variant fields for the second PPDU.

## Description

### TECHNICAL FIELD

This specification relates to a technique for transmitting an A-PPDU in a wireless LAN system, and more specifically, to a method and device for defining a trigger frame for triggering an A-PPDU in which PPDUs supporting different versions or protocols are aggregated.

### BACKGROUND ART

A wireless local area network (WLAN) has been improved in various ways. For example, the IEEE 802.11ax standard proposed an improved communication environment using orthogonal frequency division multiple access (OFDMA) and downlink multi-user multiple input multiple output (DL MU MIMO) techniques.

The present specification proposes a technical feature that can be utilized in a new communication standard. For example, the new communication standard may be an extreme high throughput (EHT) standard which is currently being discussed. The EHT standard may use an increased bandwidth, an enhanced PHY layer protocol data unit (PPDU) structure, an enhanced sequence, a hybrid automatic repeat request (HARQ) scheme, or the like, which is newly proposed. The EHT standard may be called the IEEE 802.1 The standard.

In a new WLAN standard, an increased number of spatial streams may be used. In this case, in order to properly use the increased number of spatial streams, a signaling technique in the WLAN system may need to be improved.

### DISCLOSURE

### TECHNICAL PROBLEM

This specification proposes a method and device for transmitting an A-PPDU in a wireless LAN system.

### TECHNICAL SOLUTION

An example of this specification proposes a method for transmitting an A-PPDU.

This embodiment may be performed in a network environment that supports a next-generation wireless LAN system (Ultra High Reliability (UHR) wireless LAN system or next Wi-Fi). The next-generation wireless LAN system is an improved version of the 802.11be system and can satisfy backward compatibility with the 802.11be system.

This embodiment is performed at a receiving STA, and the receiving STA may correspond to at least one station (STA). The transmitting STA may correspond to an access point (AP).

This embodiment proposes a method for defining a trigger frame for triggering an A-PPDU, which is an aggregate of PPDUs supporting different versions or protocols. In particular, this embodiment proposes a method for setting the user information field of the trigger frame so that a receiving STA that has identified its own user information field in a specific variant does not perform additional decoding.

A receiving station (STA) receives a trigger frame from a transmitting STA.

The receiving STA transmits an Aggregated-Physical layer protocol data unit (A-PPDU) to the transmitting STA based on the trigger frame.

The trigger frame includes a common information field, first and second special user information fields, and first and second user information list fields.

The A-PPDU includes a first PPDU for a primary channel and a second PPDU for a secondary channel. The primary channel may be a primary 160 MHz, and the secondary channel may be a secondary 160 MHz.

The first special user information field and the first user information list field are variant fields for the first PPDU. The second special user information field and the second user information list field are variant fields for the second PPDU.

The first PPDU may be an Extreme High Throughput (EHT) Trigger Based (TB) PPDU. The second PPDU may be an Ultra High Reliability (UHR) TB PPDU. That is, the first special user information field and the first user information list field may be EHT variant fields, and the second special user information field and the second user information list field may be UHR variant fields.

The first user information list field includes first and second user information fields.

The first user information field may be a user information field for at least one receiving STA to which the first PPDU is allocated. The second user information field may be the last user information field located after the first user information field. For example, if the number of at least one receiving STA to which the first PPDU is allocated is n, there may be n user information fields, followed by one additional user information field (the second user information field).

When/Based on an Association Identifier (AID) of the second user information field is/being set to 4095, the second user information field may include information that there is no longer a user information field in the variant field for the first PPDU.

### ADVANTAGEOUS EFFECTS

According to the embodiment proposed in this specification, by setting an AID value by inserting the second user information field into the variant field (EHT variant field) for the first PPDU, when the receiving STA has decoded its own user information field in the first user information field (EHT variant User Info field), it can no longer decode other user information fields. This has the effect of preventing unnecessary decoding by the receiving STA, thereby improving the efficiency and throughput of the uplink transmission of the receiving STA.

### BRIEF DESCRIPTION OF THE DRAWINGS

FIG. 1 shows an example of a transmitting apparatus and/or receiving apparatus of the present specification.
FIG. 2 is a conceptual view illustrating the structure of a wireless local area network (WLAN).
FIG. 3 illustrates a general link setup process.
FIG. 4 shows an example of a multi-link (ML).
FIG. 5 shows an example of a physical protocol data unit or physical layer (PHY) protocol data unit (PPDU) transmitted/received by an STA of the present disclosure.
FIG. 6 is a diagram illustrating the layout of resource units (RUs) used for a 20 MHz PPDU.
FIG. 7 is a diagram illustrating the layout of resource units (RUs) used for 40MHz PPDU.
FIG. 8 is a diagram illustrating the layout of resource units (RUs) used for an 80MHz PPDU.
FIG. 9 shows an operation related to UL-MU.
FIG. 10 illustrates an example of channels used/supported/defined within the 2.4 GHz band.
FIG. 11 illustrates an example of channels used/supported/defined within the 5 GHz band.
FIG. 12 illustrates an example of channels used/supported/defined within the 6 GHz band.
FIG. 13 shows an example of a header of a MAC frame.
FIG. 14 illustrates an example of a modified transmission device and/or receiving device of the present specification.
FIG. 15 illustrates an example of the Trigger Frame format.
FIG. 16 illustrates an example of the HE variant Common Info field format.
FIG. 17 illustrates an example of the EHT variant Common Info field format.
FIG. 18 illustrates an example of the Special User Info field format.
FIG. 19 illustrates an example of the HE variant User Info field format.
FIG. 20 illustrates an example of the EHT variant User Info field format.
FIG. 21 illustrates an example of the A-PPDU format.
FIG. 22 illustrates an example of a procedure for transmitting a UL A-PPDU.
FIG. 23 illustrates an example of the configuration of a trigger frame requesting an A-PPDU including two different PPDU formats.
FIG. 24 illustrates another example of the configuration of a trigger frame requesting an A-PPDU including two different PPDU formats.
FIG. 25 illustrates another example of the configuration of a trigger frame requesting an A-PPDU including two different PPDU formats.
FIG. 26 illustrates another example of the configuration of a trigger frame requesting an A-PPDU including two different PPDU formats.
FIG. 27 is a flowchart illustrating the operation of a transmitting device according to the present embodiment.
FIG. 28 is a flowchart illustrating the operation of a receiving device according to the present embodiment.
FIG. 29 is a flowchart illustrating a procedure for receiving an A-PPDU according to the present embodiment.
FIG. 30 is a flowchart illustrating a procedure for transmitting an A-PPDU according to the present embodiment.

### MODE FOR INVENTION

In the present disclosure, "A or B" may mean "only A", "only B" or "both A and B". In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, a parenthesis used in the present disclosure may mean "for example". Specifically, when indicated as "control information (UHR-signal field)", it may mean that "UHR-signal field" is proposed as an example of the "control information". In other words, the "control information" of the present disclosure is not limited to "UHR-signal field", and "UHR-signal field" may be proposed as an example of the "control information". In addition, when indicated as "control information (i.e., UHR-signal field)", it may also mean that "UHR-signal field" is proposed as an example of the "control information".

Also, "a/an" as used in this disclosure can mean "at least one" or "one or more." Also, a term ending with "(s)" can mean "at least one" or "one or more."

Also, the expressions "based on" or "on the basis of" or "according to" as used in this disclosure mean "based at least in part on," and do not mean "based sonly on."

Technical features described individually in one figure in the present disclosure may be individually implemented, or may be simultaneously implemented.

The following example of the present disclosure may be applied to various wireless communication systems. For example, the following example of the present disclosure may be applied to a wireless local area network (WLAN) system. For example, the present disclosure may be applied to the IEEE 802.11a/g/n/ac/ax/be/bn standard. In addition, an example of the present disclosure can also be applied to a next-generation wireless LAN standard that enhances the Ultra High Reliability (UHR) standard or IEEE 802.1 1bn. In addition, the example of the present disclosure may also be applied to a new WLAN standard enhanced from the EHT standard or the IEEE 802.11be standard. In addition, the example of the present disclosure may be applied to a mobile communication system. For example, it may be applied to a mobile communication system based on long term evolution (LTE) depending on a 3rd generation partnership project (3GPP) standard and based on evolution of the LTE. In addition, the example of the present disclosure may be applied to a communication system of a 5G NR standard based on the 3GPP standard.

Hereinafter, in order to describe a technical feature of the present disclosure, a technical feature applicable to the present disclosure will be described.

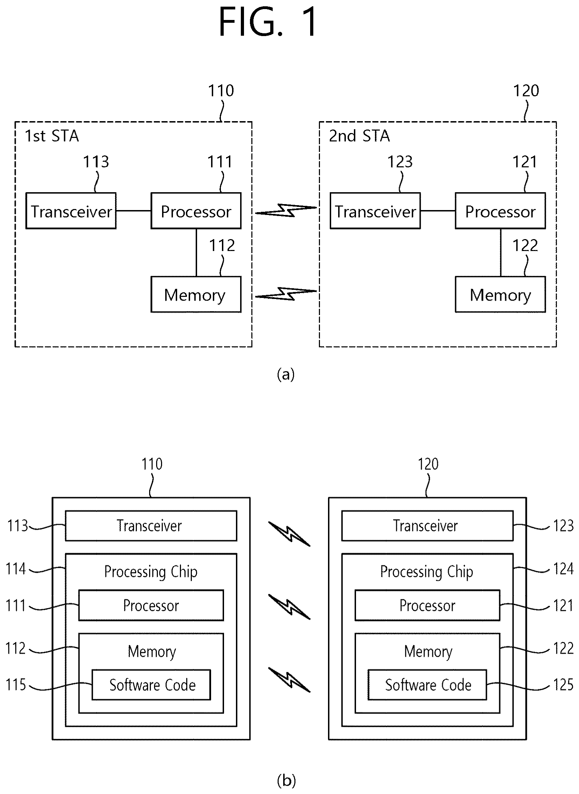

FIG. 1 shows an example of a transmitting apparatus and/or receiving apparatus of the present disclosure.

In the example of FIG. 1, various technical features described below may be performed. FIG. 1 relates to at least one station (STA). For example, STAs 110 and 120 of the present disclosure may also be called in various terms such as a mobile terminal, a wireless device, a wireless transmit/receive unit (WTRU), a user equipment (UE), a mobile station (MS), a mobile subscriber unit, or simply a user. The STAs 110 and 120 of the present disclosure may also be called in various terms such as a network, a base station, a node-B, an access point (AP), a repeater, a router, a relay, or the like. The STAs 110 and 120 of the present disclosure may also be referred to as various names such as a receiving apparatus, a transmitting apparatus, a receiving STA, a transmitting STA, a receiving device, a transmitting device, or the like.

For example, the STAs 110 and 120 may serve as an AP or a non-AP. That is, the STAs 110 and 120 of the present disclosure may serve as the AP and/or the non-AP. In the present disclosure, the AP may be indicated as an AP STA.

The STAs 110 and 120 of the present disclosure may support various communication standards together in addition to the IEEE 802.11 standard. For example, a communication standard (e.g., LTE, LTE-A, 5G NR standard) or the like based on the 3GPP standard may be supported. In addition, the STA of the present disclosure may be implemented as various devices such as a mobile phone, a vehicle, a personal computer, or the like. In addition, the STA of the present disclosure may support communication for various communication services such as voice calls, video calls, data communication, and self-driving (autonomous-driving), or the like.

The STAs 110 and 120 of the present disclosure may include a medium access control (MAC) conforming to the IEEE 802.11 standard and a physical layer interface for a radio medium.

The STAs 110 and 120 will be described below with reference to a sub-figure (a) of FIG. 1.

The first STA 110 may include a processor 111, a memory 112, and a transceiver 113. The illustrated process, memory, and transceiver may be implemented individually as separate chips, or at least two blocks/functions may be implemented through a single chip.

The transceiver 113 of the first STA performs a signal transmission/reception operation. Specifically, an IEEE 802.11 packet (e.g., IEEE 802.11a/b/g/n/ac/ax/be, etc.) may be transmitted/received.

For example, the first STA 110 may perform an operation intended by an AP. For example, the processor 111 of the AP may receive a signal through the transceiver 113, process a reception (RX) signal, generate a transmission (TX) signal, and provide control for signal transmission. The memory 112 of the AP may store a signal (e.g., RX signal) received through the transceiver 113, and may store a signal (e.g., TX signal) to be transmitted through the transceiver.

For example, the second STA 120 may perform an operation intended by a non-AP STA. For example, a transceiver 123 of a non-AP performs a signal transmission/reception operation. Specifically, an IEEE 802.11 packet (e.g., IEEE 802.11a/b/g/n/ac/ax/be packet, etc.) may be transmitted/received.

For example, a processor 121 of the non-AP STA may receive a signal through the transceiver 123, process an RX signal, generate a TX signal, and provide control for signal transmission. A memory 122 of the non-AP STA may store a signal (e.g., RX signal) received through the transceiver 123, and may store a signal (e.g., TX signal) to be transmitted through the transceiver.

For example, an operation of a device indicated as an AP in the disclosure described below may be performed in the first STA 110 or the second STA 120. For example, if the first STA 110 is the AP, the operation of the device indicated as the AP may be controlled by the processor 111 of the first STA 110, and a related signal may be transmitted or received through the transceiver 113 controlled by the processor 111 of the first STA 110. In addition, control information related to the operation of the AP or a TX/RX signal of the AP may be stored in the memory 112 of the first STA 110. In addition, if the second STA 120 is the AP, the operation of the device indicated as the AP may be controlled by the processor 121 of the second STA 120, and a related signal may be transmitted or received through the transceiver 123 controlled by the processor 121 of the second STA 120. In addition, control information related to the operation of the AP or a TX/RX signal of the AP may be stored in the memory 122 of the second STA 120.

For example, in the disclosure described below, an operation of a device indicated as a non-AP (or user-STA) may be performed in the first STA 110 or the second STA 120. For example, if the second STA 120 is the non-AP, the operation of the device indicated as the non-AP may be controlled by the processor 121 of the second STA 120, and a related signal may be transmitted or received through the transceiver 123 controlled by the processor 121 of the second STA 120. In addition, control information related to the operation of the non-AP or a TX/RX signal of the non-AP may be stored in the memory 122 of the second STA 120. For example, if the first STA 110 is the non-AP, the operation of the device indicated as the non-AP may be controlled by the processor 111 of the first STA 110, and a related signal may be transmitted or received through the transceiver 113 controlled by the processor 111 of the first STA 110. In addition, control information related to the operation of the non-AP or a TX/RX signal of the non-AP may be stored in the memory 112 of the first STA 110.

In the disclosure described below, a device called a (transmitting/receiving) STA, a first STA, a second STA, an STA1, an STA2, an AP, a first AP, a second AP, an AP1, an AP2, a (transmitting/receiving) terminal, a (transmitting/receiving) device, a (transmitting/receiving) apparatus, a network, or the like may imply the STAs 110 and 120 of FIG. 1. For example, a device indicated as, without a specific reference numeral, the (transmitting/receiving) STA, the first STA, the second STA, the STA1, the STA2, the AP, the first AP, the second AP, the AP1, the AP2, the (transmitting/receiving) terminal, the (transmitting/receiving) device, the (transmitting/receiving) apparatus, the network, or the like may imply the STAs 110 and 120 of FIG. 1. For example, in the following example, an operation in which various STAs transmit/receive a signal (e.g., a PPDU) may be performed in the transceivers 113 and 123 of FIG. 1. In addition, in the following example, an operation in which various STAs generate a TX/RX signal or perform data processing and computation in advance for the TX/RX signal may be performed in the processors 111 and 121 of FIG. 1. For example, an example of an operation for generating the TX/RX signal or performing the data processing and computation in advance may include: 1) an operation of determining/obtaining/configuring/computing/decoding/encoding bit information of a sub-field (SIG, STF, LTF, Data) included in a PPDU; 2) an operation of determining/configuring/obtaining a time resource or frequency resource (e.g., a subcarrier resource) or the like used for the sub-field (SIG, STF, LTF, Data) included the PPDU; 3) an operation of determining/configuring/obtaining a specific sequence (e.g., a pilot sequence, an STF/LTF sequence, an extra sequence applied to SIG) or the like used for the sub-field (SIG, STF, LTF, Data) field included in the PPDU; 4) a power control operation and/or power saving operation applied for the STA; and 5) an operation related to determining/obtaining/configuring/decoding/encoding or the like of an ACK signal. In addition, in the following example, a variety of information used by various STAs for determining/obtaining/configuring/computing/decoding/decoding a TX/RX signal (e.g., information related to a field/subfield/control field/parameter/power or the like) may be stored in the memories 112 and 122 of FIG. 1.

The aforementioned device/STA of the sub-figure (a) of FIG. 1 may be modified as shown in the sub-figure (b) of FIG. 1. Hereinafter, the STAs 110 and 120 of the present disclosure will be described based on the sub-figure (b) of FIG. 1.

For example, the transceivers 113 and 123 illustrated in the sub-figure (b) of FIG. 1 may perform the same function as the aforementioned transceiver illustrated in the sub-figure (a) of FIG. 1. For example, processing chips 114 and 124 illustrated in the sub-figure (b) of FIG. 1 may include the processors 111 and 121 and the memories 112 and 122. The processors 111 and 121 and memories 112 and 122 illustrated in the sub-figure (b) of FIG. 1 may perform the same function as the aforementioned processors 111 and 121 and memories 112 and 122 illustrated in the sub-figure (a) of FIG. 1.

A mobile terminal, a wireless device, a wireless transmit/receive unit (WTRU), a user equipment (UE), a mobile station (MS), a mobile subscriber unit, a user, a user STA, a network, a base station, a Node-B, an access point (AP), a repeater, a router, a relay, a receiving unit, a transmitting unit, a receiving STA, a transmitting STA, a receiving device, a transmitting device, a receiving apparatus, and/or a transmitting apparatus, which are described below, may imply the STAs 110 and 120 illustrated in the sub-figure (a)/(b) of FIG. 1, or may imply the processing chips 114 and 124 illustrated in the sub-figure (b) of FIG. 1. That is, a technical feature of the present disclosure may be performed in the STAs 110 and 120 illustrated in the sub-figure (a)/(b) of FIG. 1, or may be performed only in the processing chips 114 and 124 illustrated in the sub-figure (b) of FIG. 1. For example, a technical feature in which the transmitting STA transmits a control signal may be understood as a technical feature in which a control signal generated in the processors 111 and 121 illustrated in the sub-figure (a)/(b) of FIG. 1 is transmitted through the transceivers 113 and 123 illustrated in the sub-figure (a)/(b) of FIG. 1. Alternatively, the technical feature in which the transmitting STA transmits the control signal may be understood as a technical feature in which the control signal to be transferred to the transceivers 113 and 123 is generated in the processing chips 114 and 124 illustrated in the sub-figure (b) of FIG. 1.

For example, a technical feature in which the receiving STA receives the control signal may be understood as a technical feature in which the control signal is received by means of the transceivers 113 and 123 illustrated in the sub-figure (a) of FIG. 1. Alternatively, the technical feature in which the receiving STA receives the control signal may be understood as the technical feature in which the control signal received in the transceivers 113 and 123 illustrated in the sub-figure (a) of FIG. 1 is obtained by the processors 111 and 121 illustrated in the sub-figure (a) of FIG. 1. Alternatively, the technical feature in which the receiving STA receives the control signal may be understood as the technical feature in which the control signal received in the transceivers 113 and 123 illustrated in the sub-figure (b) of FIG. 1 is obtained by the processing chips 114 and 124 illustrated in the sub-figure (b) of FIG. 1.

Referring to the sub-figure (b) of FIG. 1, software codes 115 and 125 may be included in the memories 112 and 122. The software codes 115 and 126 may include instructions for controlling an operation of the processors 111 and 121. The software codes 115 and 125 may be included as various programming languages.

The processors 111 and 121 or processing chips 114 and 124 of FIG. 1 may include an application-specific integrated circuit (ASIC), other chipsets, a logic circuit and/or a data processing device. The processor may be an application processor (AP). For example, the processors 111 and 121 or processing chips 114 and 124 of FIG. 1 may include at least one of a digital signal processor (DSP), a central processing unit (CPU), a graphics processing unit (GPU), and a modulator and demodulator (modem). For example, the processors 111 and 121 or processing chips 114 and 124 of FIG. 1 may be SNAPDRAGONTM series of processors made by Qualcomm^{®}, EXYNOSTM series of processors made by Samsung^{®}, A series of processors made by Apple^{®}, HELIOTM series of processors made by MediaTek^{®}, ATOMTM series of processors made by Intel^{®} or processors enhanced from these processors.

In the present disclosure, an uplink may imply a link for communication from a non-AP STA to an AP STA, and an uplink PPDU/packet/signal or the like may be transmitted through the uplink. In addition, in the present disclosure, a downlink may imply a link for communication from the AP STA to the non-AP STA, and a downlink PPDU/packet/signal or the like may be transmitted through the downlink.

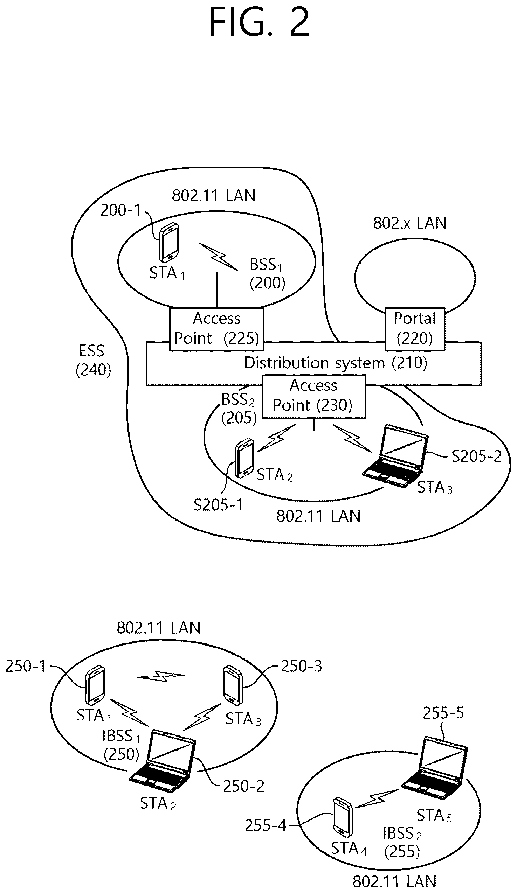

FIG. 2 is a conceptual view illustrating the structure of a wireless local area network (WLAN).

An upper part of FIG. 2 illustrates the structure of an infrastructure basic service set (BSS) of institute of electrical and electronic engineers (IEEE) 802.11.

An upper part of FIG. 2 illustrates the structure of an infrastructure basic service set (BSS) of institute of electrical and electronic engineers (IEEE) 802.11.

Referring the upper part of FIG. 2, the wireless LAN system may include one or more infrastructure BSSs 200 and 205 (hereinafter, referred to as BSS). The BSSs 200 and 205 as a set of an AP and an STA such as an access point (AP) 225 and a station (STA1) 200-1 which are successfully synchronized to communicate with each other are not concepts indicating a specific region. The BSS 205 may include one or more STAs 205-1 and 205-2 which may be joined to one AP 230.

The BSS may include at least one STA, an AP 225, 230 providing a distribution service, and a distribution system (DS) 210 connecting multiple APs.

The distribution system 210 may implement an extended service set (ESS) 240 extended by connecting the multiple BSSs 200 and 205. The ESS 240 may be used as a term indicating one network configured by connecting one or more APs 225 or 230 through the distribution system 210. The AP included in one ESS 240 may have the same service set identification (SSID).

A portal 220 may serve as a bridge which connects the wireless LAN network (IEEE 802.11) and another network (e.g., 802.X).

In the BSS illustrated in the upper part of FIG. 2, a network between the APs 225 and 230 and a network between the APs 225 and 230 and the STAs 200-1, 205-1, and 205-2 may be implemented. However, the network is configured even between the STAs without the APs 225 and 230 to perform communication. A network in which the communication is performed by configuring the network even between the STAs without the APs 225 and 230 is defined as an Ad-Hoc network or an independent basic service set (IBSS).

A lower part of FIG. 2 illustrates a conceptual view illustrating the IBSS.

Referring to the lower part of FIG. 2, the IBSS is a BSS that operates in an Ad-Hoc mode. Since the IBSS does not include the access point (AP), a centralized management entity that performs a management function at the center does not exist. That is, in the IBSS, STAs 250-1, 250-2, 250-3, 255-4, and 255-5 are managed by a distributed manner. In the IBSS, all STAs 250-1, 250-2, 250-3, 255-4, and 255-5 may be constituted by movable STAs and are not permitted to access the DS to constitute a self-contained network.

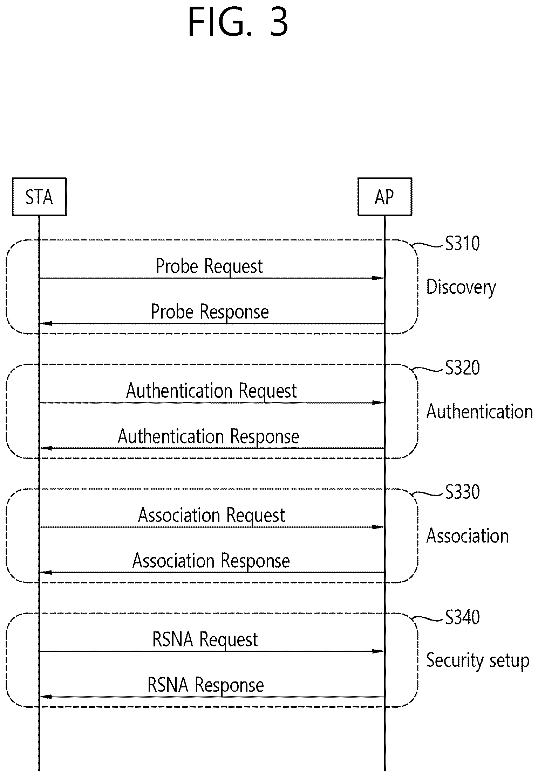

FIG. 3 illustrates a general link setup process.

In S310, a STA may perform a network discovery operation. The network discovery operation may include a scanning operation of the STA. That is, to access a network, the STA needs to discover a participating network. The STA needs to identify a compatible network before participating in a wireless network, and a process of identifying a network present in a particular area is referred to as scanning. Scanning methods include active scanning and passive scanning.

FIG. 3 illustrates a network discovery operation including an active scanning process. In active scanning, a STA performing scanning transmits a probe request frame and waits for a response to the probe request frame in order to identify which AP is present around while moving to channels. A responder transmits a probe response frame as a response to the probe request frame to the STA having transmitted the probe request frame. Here, the responder may be a STA that transmits the last beacon frame in a BSS of a channel being scanned. In the BSS, since an AP transmits a beacon frame, the AP is the responder. In an IBSS, since STAs in the IBSS transmit a beacon frame in turns, the responder is not fixed. For example, when the STA transmits a probe request frame via channel 1 and receives a probe response frame via channel 1, the STA may store BSS-related information included in the received probe response frame, may move to the next channel (e.g., channel 2), and may perform scanning (e.g., transmits a probe request and receives a probe response via channel 2) by the same method.

Although not shown in FIG. 3, scanning may be performed by a passive scanning method. In passive scanning, a STA performing scanning may wait for a beacon frame while moving to channels. A beacon frame is one of management frames in IEEE 802.11 and is periodically transmitted to indicate the presence of a wireless network and to enable the STA performing scanning to find the wireless network and to participate in the wireless network. In a BSS, an AP serves to periodically transmit a beacon frame. In an IBSS, STAs in the IBSS transmit a beacon frame in turns. Upon receiving the beacon frame, the STA performing scanning stores information about a BSS included in the beacon frame and records beacon frame information in each channel while moving to another channel. The STA having received the beacon frame may store BSS-related information included in the received beacon frame, may move to the next channel, and may perform scanning in the next channel by the same method.

After discovering the network, the STA may perform an authentication process in S320. The authentication process may be referred to as a first authentication process to be clearly distinguished from the following security setup operation in S340. The authentication process in S320 may include a process in which the STA transmits an authentication request frame to the AP and the AP transmits an authentication response frame to the STA in response. The authentication frames used for an authentication request/response are management frames.

The authentication frames may include information about an authentication algorithm number, an authentication transaction sequence number, a status code, a challenge text, a robust security network (RSN), and a finite cyclic group.

The STA may transmit the authentication request frame to the AP. The AP may determine whether to allow the authentication of the STA based on the information included in the received authentication request frame. The AP may provide the authentication processing result to the STA via the authentication response frame.

When the STA is successfully authenticated, the STA may perform an association process in S330. The association process includes a process in which the STA transmits an association request frame to the AP and the AP transmits an association response frame to the STA in response. The association request frame may include, for example, information about various capabilities, a beacon listen interval, a service set identifier (SSID), a supported rate, a supported channel, RSN, a mobility domain, a supported operating class, a traffic indication map (TIM) broadcast request, and an interworking service capability. The association response frame may include, for example, information about various capabilities, a status code, an association ID (AID), a supported rate, an enhanced distributed channel access (EDCA) parameter set, a received channel power indicator (RCPI), a received signal-to-noise indicator (RSNI), a mobility domain, a timeout interval (association comeback time), an overlapping BSS scanning parameter, a TIM broadcast response, and a QoS map.

In S340, the STA may perform a security setup process. The security setup process in S340 may include a process of setting up a private key through four-way handshaking, for example, through an extensible authentication protocol over LAN (EAPOL) frame.

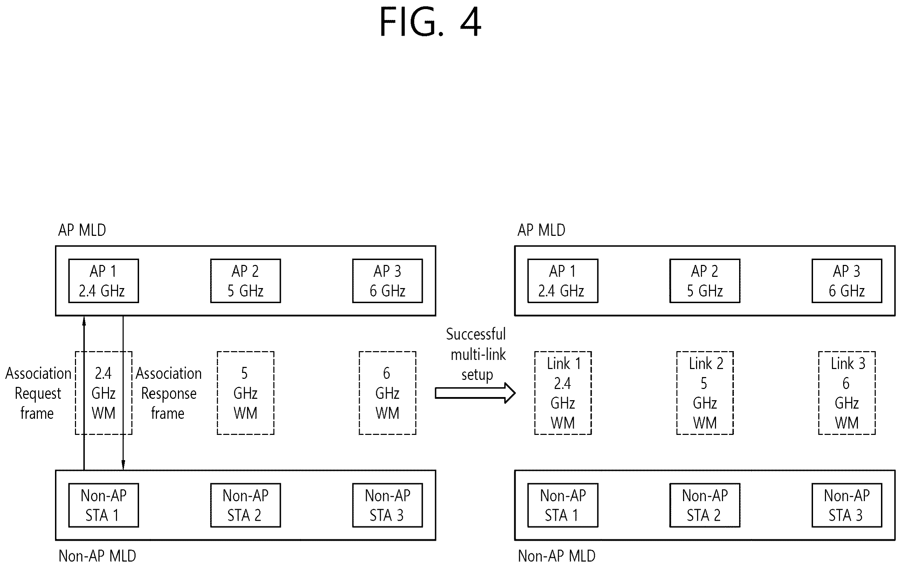

FIG. 4 shows an example of a multi-link (ML).

As illustrated in FIG. 4, multiple multi-link devices (MLDs) can perform communication via a remote link. The MLD can be classified into an AP MLD including multiple AP STAs and a non-AP MLD including multiple non-AP STAs. That is, the AP MLD can include affiliated APs (i.e., AP STAs), and the non-AP MLD can include affiliated STAs (i.e., non-AP STAs, or user-STAs).

The multi-link can include a first link and a second link, and different channels/subchannels/frequency resources can be allocated to the first and second links. The first and second multi-links can be identified through a link ID of 4 bits (or other n bits). The first and second links may be configured in the same 2.4 GHz, 5 GHz, or 6 GHz band. Alternatively, the first link and the second link may be configured in different bands.

The AP MLD of FIG. 4 includes three affiliated APs. In the example of FIG. 4, AP1 may operate in the 2.4 GHz band, AP2 may operate in the 5 GHz band, and AP3 may operate in the 6 GHz band. In the example of FIG. 4, the first link in which AP1 and non-AP1 operate may be defined as a channel/subchannel/frequency resource within the 2.4 GHz band. In addition, in the example of FIG. 4, the second link in which AP2 and non-AP2 operate may be defined as a channel/subchannel/frequency resource within the 5 GHz band. In addition, in the example of FIG. 4, the third link where AP3 and non-AP3 operate can be defined as a channel/subchannel/frequency resource within the 6 GHz band.

In the example of FIG. 4, AP1 can start a multi-link setup procedure (ML setup procedure) by transmitting an association request frame to non-AP STA1. In the example of FIG. 4, non-AP STA1 can transmit an association response frame in response to the association request frame. Each AP (e.g., AP1/2/3) illustrated in FIG. 4 may be identical to the AP illustrated in FIG. 1 and/or FIG. 2, and each non-AP (e.g., non-AP1/2/3) illustrated in FIG. 4 may be identical to the STA (i.e., user-STA or non-AP STA) illustrated in FIG. 1 and/or FIG. 2.

The specific features of the present disclosure are not limited to the specific features of FIG. 4. That is, the number of links can be defined in various ways, and multiple links can be defined in various ways within at least one band.

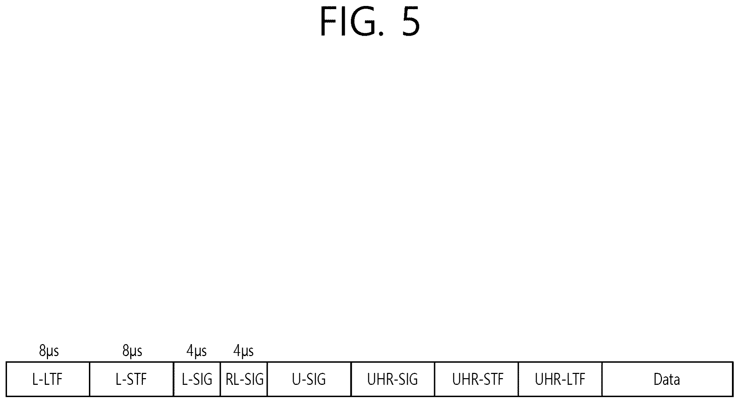

FIG. 5 shows an example of a physical protocol data unit or physical layer (PHY) protocol data unit (PPDU) transmitted/received by an STA of the present disclosure.

An STA (e.g., an AP STA, a non-AP STA, an AP MLD, a non-AP MLD) of the present disclosure can transmit and/or receive a PPDU of FIG. 5. The PPDU described in the present disclosure can have, for example, a structure of FIG. 5. In addition, the PPDU described in the present disclosure can be called by various names such as a transmission PPDU, a reception PPDU, a first type or an N^{th} type PPDU, etc. The PPDU described in the present disclosure can be used in a WLAN system defined according to IEEE 802.11bn and/or a next-generation WLAN system that improves IEEE 802.11bn.

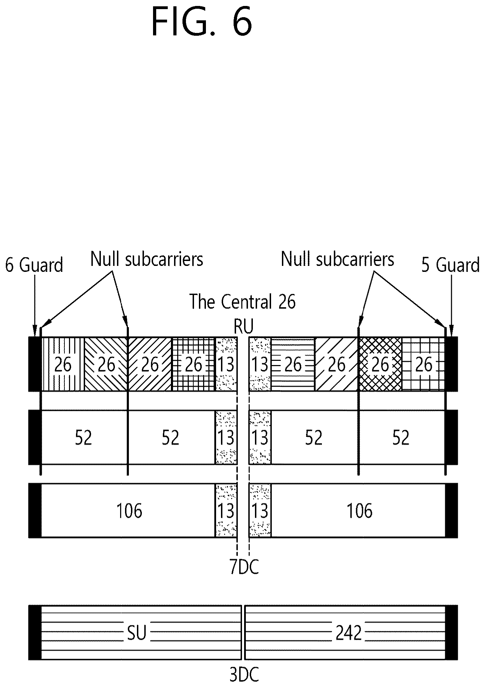

The PPDU of FIG. 5 can be related to various PPDU types used in a UHR system. For example, the example of FIG. 5 can be used for at least one of single-user (SU) mode/type/transmission, multi-user (MU) mode/type/transmission, and null-data packet (NDP) mode/type/transmission related to channel sounding. For example, if the example of FIG. 5 is related to NDP, the data field illustrated can be omitted. If the PPDU of FIG. 5 is used for trigger-based (TB) mode, UHR-SIG of FIG. 6 can be omitted. In other words, an STA that has received a trigger frame for uplink-MU (UL-MU) communication can transmit a PPDU with UHR-SIG omitted in the example of FIG. 5.

In FIG. 5, L-STF or UHR-LTF may be called a preamble or a physical preamble, and may be generated/transmitted/received/acquired/decoded in the physical layer (included in the transmitting/receiving STA).

Each block illustrated in FIG. 5 may be called a field/subfield/signal, etc. The names of these fields/subfields/signals may be legacy short training field (L-STF), legacy long training field (L-LTF), legacy signal (L-SIG), repeated L-SIG (RL-SIG), universal signal (U-SIG), UHR-signal (UHR-SIG), etc., as illustrated in FIG. 5.

A subcarrier spacing of the L-STF, L-LTF, L-SIG, RL-SIG, U-SIG, and UHR-SIG fields of FIG. 5 may be determined as 312.5 kHz, and a subcarrier spacing of the UHR-STF, UHR-LTF, and Data fields may be determined as 78.125 kHz. That is, a tone index (or subcarrier index) of the L-STF, L-LTF, L-SIG, RL-SIG, U-SIG, and UHR -SIG fields may be expressed in unit of 312.5 kHz, and a tone index (or subcarrier index) of the UHR-STF, UHR-LTF, and Data fields may be expressed in unit of 78.125 kHz.

In the PPDU of FIG. 5, the L-LTF and the L-STF may be the same as those in the conventional fields (for example, non-HT LTF and non-HT STF defined in conventional WLAN standards).

The L-SIG field of FIG. 5 may include, for example, bit information of 24 bits. For example, the 24-bit information may include a rate field of 4 bits, a reserved bit of 1 bit, a length field of 12 bits, a parity bit of 1 bit, and a tail bit of 6 bits. For example, the length field of 12 bits may include information related to a length or time duration of a PPDU. For example, the length field of 12 bits may be determined based on a type of the PPDU. For example, when the PPDU is a non-high throughput (HT), high throughput (HT), very high throughput (VHT) PPDU, extremely high throughput (EHT) PPDU or UHR PPDU, a value of the length field may be determined as a multiple of 3. For example, when the PPDU is an HE PPDU, the value of the length field may be determined as "a multiple of 3"+1 or "a multiple of 3"+2. In other words, for the non-HT, HT, VHT PPDI, EHT PPDU or the UHR PPDU, the value of the length field may be determined as a multiple of 3, and for the high efficiency (HE) PPDU, the value of the length field may be determined as "a multiple of 3"+1 or "a multiple of 3"+2. In other words, the LENGTH field in an UHR PPDU is set to a value satisfying the condition that the remainder is zero when LENGTH is divided by 3

For example, the (non-AP and AP) STA may apply BCC encoding based on a 1/2 coding rate to the 24-bit information of the L-SIG field. Thereafter, the transmitting STA may obtain a BCC coding bit of 48 bits. BPSK modulation may be applied to the 48-bit coding bit, thereby generating 48 BPSK symbols. The transmitting STA may map the 48 BPSK symbols to positions except for a pilot subcarrier{ subcarrier index -21, -7, +7, +21} and a DC subcarrier{subcarrier index 0}. As a result, the 48 BPSK symbols may be mapped to subcarrier indices -26 to -22, -20 to -8, -6 to -1, +1 to +6, +8 to +20, and +22 to +26. The transmitting STA may additionally map a signal of {-1, -1, -1, 1} to a subcarrier index {-28, -27, +27, +28}. The aforementioned signal may be used for channel estimation in the frequency domain corresponding to {-28, -27, +27, +28}.

For example, the (non-AP and AP) STA may generate an RL-SIG generated in the same manner as the L-SIG. BPSK modulation may be applied to the RL-SIG. The (non-AP and AP) STA may know that the RX PPDU is the HE PPDU, EHT PPDU, or the UHR PPDU, based on the presence of the RL-SIG. In other words, a receiving (non-AP and AP) STA can know that a received PPDU is one of a HE PPDU, an EHT PPDU, and a UHR PPDU if RL-SIG is present. In other words, a receiving (non-AP and AP) STA can know that a received PPDU is one of a non-HT PPDU, an HT PPDU, and a VHT PPDU if RL-SIG is not present. In other words, the RL-SIG field is a repeat of the L-SIG field and is used to differentiate a UHR PPDU from a non-HT PPDU, HT PPDU, and VHT PPDU.

A universal SIG (U-SIG) may be inserted after the RL-SIG of FIG. 6. The U-SIG may be called in various terms such as a first SIG field, a first SIG, a first type SIG, a control signal, a control signal field, a first (type) control signal, common control field, common control signal, or the like.

The U-SIG may include information of N bits, and may include information for identifying a type of the EHT PPDU. For example, the U-SIG may be configured based on two symbols (e.g., two contiguous OFDM symbols). Each symbol (e.g., OFDM symbol) for the U-SIG may have a duration of 4us. Each symbol of the U-SIG may be used to transmit the 26-bit information. For example, each symbol of the U-SIG may be transmitted/received based on 52 data tomes and 4 pilot tones.

Through the U-SIG for example, A-bit information (e.g., 52 un-coded bits) may be transmitted. A first symbol of the U-SIG may transmit first X-bit information (e.g., 26 un-coded bits) of the A-bit information, and a second symbol of the U-SIG may transmit the remaining Y-bit information (e.g. 26 un-coded bits) of the A-bit information. For example, the transmitting STA may obtain 26 un-coded bits included in each U-SIG symbol. The transmitting STA may perform convolutional encoding (i.e., BCC encoding) based on a rate of R=1/2 to generate 52-coded bits, and may perform interleaving on the 52-coded bits. The transmitting STA may perform BPSK modulation on the interleaved 52-coded bits to generate 52 BPSK symbols to be allocated to each U-SIG symbol. One U-SIG symbol may be transmitted based on 65 tones (subcarriers) from a subcarrier index -28 to a subcarrier index +28, except for a DC index 0. The 52 BPSK symbols generated by the transmitting STA may be transmitted based on the remaining tones (subcarriers) except for pilot tones, i.e., tones -21, -7, +7, +21.

For example, the A-bit information (e.g., 52 un-coded bits) generated by the U-SIG may include a CRC field (e.g., a field having a length of 4 bits) and a tail field (e.g., a field having a length of 6 bits). The CRC field and the tail field may be transmitted through the second symbol of the U-SIG. The CRC field may be generated based on 26 bits allocated to the first symbol of the U-SIG and the remaining 16 bits except for the CRC/tail fields in the second symbol, and may be generated based on the conventional CRC calculation algorithm. In addition, the tail field may be used to terminate trellis of a convolutional decoder, and may be set to, for example, '000000'.

The A-bit information (e.g., 52 un-coded bits) transmitted by the U-SIG (or U-SIG field) may be divided into version-independent bits and version-dependent bits. For example, the version-independent bits may have a fixed or variable size. For example, the version-independent bits may be allocated only to the first symbol of the U-SIG, or the version-independent bits may be allocated to both of the first and second symbols of the U-SIG. For example, the version-independent bits and the version-dependent bits may be called in various terms such as a first control bit, a second control bit, or the like.

For example, the version-independent bits of the U-SIG may include a PHY version identifier of 3 bits. For example, the PHY version identifier of 3 bits may include information related to a PHY version of a TX/RX PPDU. For example, a first value of the PHY version identifier of 3 bits (for example, 000 value) may indicate that the TX/RX PPDU is an EHT PPDU. Also, a second value of the PHY version identifier of 3 bits (for example, 001 value) may indicate that the TX/RX PPDU is a UHR PPDU.

In other words, when the (AP/non-AP) STA transmits an EHT PPDU, the 3-bit PHY version identifier can be set to the first value, and when the (AP/non-AP) STA transmits a UHR PPDU, the 3-bit PHY version identifier can be set to the second value. In other words, the receiving (AP/non-AP) STA can determine that the received PPDU is an EHT PPDU based on the PHY version identifier having the first value, and can determine that the received PPDU is a UHR PPDU based on the PHY version identifier having the second value.

For example, the version-independent bits of the U-SIG may include a UL/DL flag field of 1 bit. A first value of the UL/DL flag field of 1 bit relates to UL communication, and a second value of the UL/DL flag field relates to DL communication.

For example, the version-independent bits of the U-SIG may include information related to a transmission opportunity (TXOP) length and information related to a BSS color ID.

For example, if a UHR PPDU is classified into various types (e.g., type related to SU transmission (performed based on UL or DL), type related to DL transmission, type related to NDP transmission, type related to DL non-MU-MIMO, type related to DL MU-MIMO, type related to multi-AP operation, type related to coordinated beamforming (Co-BF), spatial reuse (SR), type related to coordinated OFDMA (C-OFDMA), type related to coordinated TDMA (Co-TDMA)), information about the type of the UHR PPDU (e.g., 2-bit or 3-bit information) can be included in the version-dependent bits of the U-SIG.

For example, the U-SIG may include: 1) a bandwidth field including information related to a bandwidth; 2) a field including information related to an modulation and coding scheme (MCS) applied to UHR-SIG; 3) an indication field including information regarding whether a dual subcarrier modulation (DCM) scheme is applied to UHR-SIG; 4) a field including information related to the number of symbol used for UHR-SIG; 5) a field including information regarding whether the UHR-SIG is generated across a full band; 6) a field including information related to a type of UHR-LTF/STF; and 7) information related to a field indicating an UHR-LTF length and a CP length.

Preamble puncturing may be applied to the PPDU of FIG. 5. The preamble puncturing implies that puncturing is applied to part (e.g., a secondary 20 MHz band) of the full band. For example, when an 80 MHz PPDU is transmitted, an STA may apply puncturing to the secondary 20 MHz band out of the 80 MHz band, and may transmit a PPDU only through a primary 20 MHz band and a secondary 40 MHz band.

For example, a pattern of the preamble puncturing may be configured in advance. For example, when a first puncturing pattern is applied, puncturing may be applied only to the secondary 20 MHz band within the 80 MHz band. For example, when a second puncturing pattern is applied, puncturing may be applied to only any one of two secondary 20 MHz bands included in the secondary 40 MHz band within the 80 MHz band. For example, when a third puncturing pattern is applied, puncturing may be applied to only the secondary 20 MHz band included in the primary 80 MHz band within the 160 MHz band (or 80+80 MHz band). For example, when a fourth puncturing is applied, puncturing may be applied to at least one 20 MHz channel not belonging to a primary 40 MHz band in the presence of the primary 40 MHz band included in the 80MHaz band within the 160 MHz band (or 80+80 MHz band).

Information related to the preamble puncturing applied to the PPDU may be included in U-SIG and/or UHR-SIG. For example, a first field of the U-SIG may include information related to a contiguous bandwidth, and second field of the U-SIG may include information related to the preamble puncturing applied to the PPDU.

For example, the U-SIG and the UHR-SIG may include the information related to the preamble puncturing, based on the following method. When a bandwidth of the PPDU exceeds 80 MHz, the U-SIG may be configured individually in unit of 80 MHz. For example, when the bandwidth of the PPDU is 160 MHz, the PPDU may include a first U-SIG for a first 80 MHz band and a second U-SIG for a second 80 MHz band. In this case, a first field of the first U-SIG may include information related to a 160 MHz bandwidth, and a second field of the first U-SIG may include information related to a preamble puncturing (i.e., information related to a preamble puncturing pattern) applied to the first 80 MHz band. In addition, a first field of the second U-SIG may include information related to a 160 MHz bandwidth, and a second field of the second U-SIG may include information related to a preamble puncturing (i.e., information related to a preamble puncturing pattern) applied to the second 80 MHz band. Meanwhile, an UHR-SIG contiguous to the first U-SIG may include information related to a preamble puncturing applied to the second 80 MHz band (i.e., information related to a preamble puncturing pattern), and an UHR-SIG contiguous to the second U-SIG may include information related to a preamble puncturing (i.e., information related to a preamble puncturing pattern) applied to the first 80 MHz band.

Additionally or alternatively, the U-SIG and the UHR-SIG may include the information related to the preamble puncturing, based on the following method. The U-SIG may include information related to a preamble puncturing (i.e., information related to a preamble puncturing pattern) for all bands. That is, the UHR-SIG may not include the information related to the preamble puncturing, and only the U-SIG may include the information related to the preamble puncturing (i.e., the information related to the preamble puncturing pattern).

The U-SIG may be configured in unit of 20 MHz. For example, when an 80 MHz PPDU is configured, the U-SIG may be duplicated. That is, four identical U-SIGs may be included in the 80 MHz PPDU. PPDUs exceeding an 80 MHz bandwidth may include different U-SIGs.

The UHR-SIG of FIG. 5 may include control information for the receiving STA. The UHR-SIG may be transmitted through at least one symbol, and one symbol may have a length of 4us. Information related to the number of symbols used for the UHR-SIG may be included in the U-SIG.

UHR-SIG provides an additional signal to the U-SIG field to enable STA to interpret/decode UHR PPDU. UHR-SIG field may include U-SIG overflow bits that are commonly applied to all users. In addition, UHR-SIG field includes resource allocation information, so that STA can look-up resources used in fields including data field/UHR-STF/UHR-LTF (i.e., UHR modulated fields of a UHR PPDU).

Frequency resources of UHR-LTF, UHR-STF, and data fields illustrated in FIG. 5 may be determined based on RUs (resource units) defined by multiple subcarriers/tones. That is, UHR-LTF, UHR-STF, and data fields of the present disclosure may be transmitted/received through RUs (resource units) defined by multiple subcarriers/tones.

FIG. 6 is a diagram illustrating the layout of resource units (RUs) used for a 20 MHz PPDU. That is, the UHR-LTF, UHR-STF, and/or data fields included in the 20 MHz PPDU may be transmitted/received through at least one of the various RUs defined in FIG. 6.

As illustrated in the uppermost part of FIG. 6, a 26-unit (i.e., a unit corresponding to 26 tones) may be disposed. Six tones may be used for a guard band in the leftmost band of the 20 MHz band, and five tones may be used for a guard band in the rightmost band of the 20 MHz band. Further, seven DC tones may be inserted in a center band, that is, a DC band, and a 26-unit corresponding to 13 tones on each of the left and right sides of the DC band may be disposed. A 26-unit, a 52-unit, and a 106-unit may be allocated to other bands. Each unit may be allocated for a receiving STA, that is, a user.

Meanwhile, the layout of the RUs in FIG. 6 may be used not only for a multiple users (MUs) but also for a single user (SU), in which case one 242-unit may be used and three DC tones may be inserted as illustrated in the lowermost part of FIG. 6.

Although FIG. 6 proposes RUs having various sizes, that is, a 26-RU, a 52-RU, a 106-RU, and a 242-RU, specific sizes of RUs may be extended or increased. Therefore, the present embodiment is not limited to the specific size of each RU (i.e., the number of corresponding tones). In this specification, N-RU may be represented as N-tone RU, etc. For example, 26-RU may be represented as 26-tone RU.

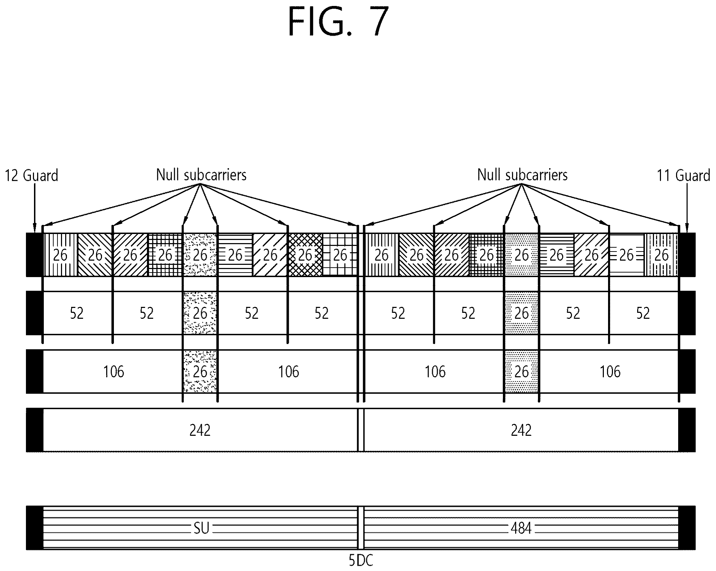

FIG. 7 is a diagram illustrating the layout of resource units (RUs) used for 40MHz PPDU.

Similarly to FIG. 6 in which RUs having various sizes are used, a 26-RU, a 52-RU, a 106-RU, a 242-RU, a 484-RU, and the like may be used in an example of FIG. 7. Further, five DC tones may be inserted in a center frequency, 12 tones may be used for a guard band in the leftmost band of the 40 MHz band, and 11 tones may be used for a guard band in the rightmost band of the 40 MHz band.

As illustrated in FIG. 7, when the layout of the RUs is used for a single user, a 484-RU may be used. The specific number of RUs may be changed similarly to FIG. 6.

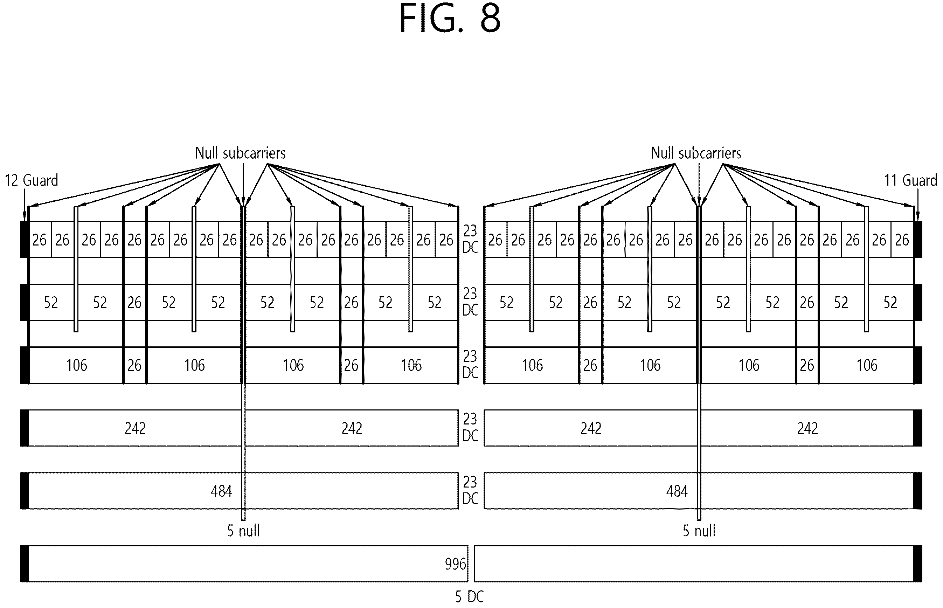

FIG. 8 is a diagram illustrating the layout of resource units (RUs) used for an 80MHz PPDU. The layout of resource units (RUs) used in this specification may vary. For example, the layout of resource units (RUs) used in the 80MHz band may vary.

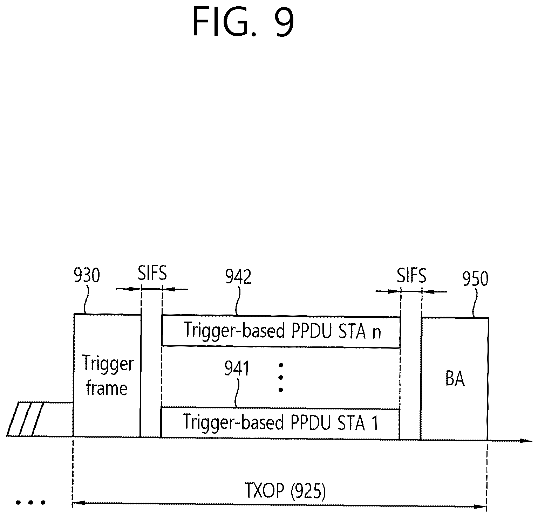

FIG. 9 shows an operation related to UL-MU. As illustrated, a transmitting STA (e.g., AP) can perform channel access through contending (i.e., backoff operation) and transmit a trigger frame (930). That is, the transmitting STA (e.g., AP) can transmit a PPDU including a trigger frame (930). When a PPDU including a trigger frame is received, a TB (trigger-based) PPDU is transmitted after a delay of SIFS.

TB PPDUs (941, 942) are transmitted at the same time and can be transmitted from multiple STAs (e.g., User STAs) whose AIDs are indicated in the Trigger frame (930). The ACK frame (950) for the TB PPDU can be implemented in various forms.

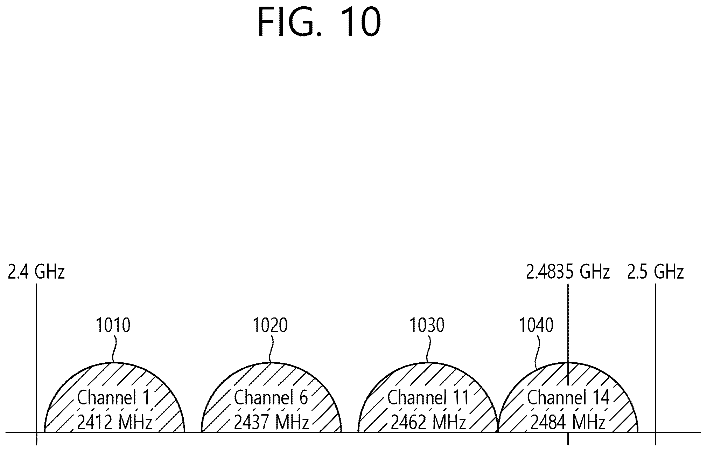

FIG. 10 illustrates an example of channels used/supported/defined within the 2.4 GHz band.

The 2.4 GHz band may also be referred to by other names, such as "first band." Furthermore, the 2.4 GHz band may refer to a frequency range in which channels with center frequencies adjacent to 2.4 GHz (e.g., channels with center frequencies between 2.4 and 2.5 GHz) are used/supported/defined.

The 2.4 GHz band may include multiple 20 MHz channels. The 20 MHz within the 2.4 GHz band may have multiple channel indices (e.g., indices 1 through 14). For example, the center frequency of a 20 MHz channel assigned channel index 1 may be 2.412 GHz, the center frequency of a 20 MHz channel assigned channel index 2 may be 2.417 GHz, and the center frequency of a 20 MHz channel assigned channel index N may be (2.407 + 0.005*N) GHz. The channel indices may be referred to by various names, such as channel numbers. The specific numerical values of the channel indices and center frequencies may change.

FIG. 10 exemplarily illustrates four channels within the 2.4 GHz band. The illustrated first frequency region (1010) to fourth frequency region (1040) may each include one channel. For example, the first frequency region (1010) may include channel 1 (a 20 MHz channel having an index of 1). In this case, the center frequency of channel 1 may be set to 2412 MHz. The second frequency region (1020) may include channel 6. In this case, the center frequency of channel 6 may be set to 2437 MHz. The third frequency region (1030) may include channel 11. In this case, the center frequency of channel 11 may be set to 2462 MHz. The fourth frequency region (1040) may include channel 14. In this case, the center frequency of channel 14 may be set to 2484 MHz.

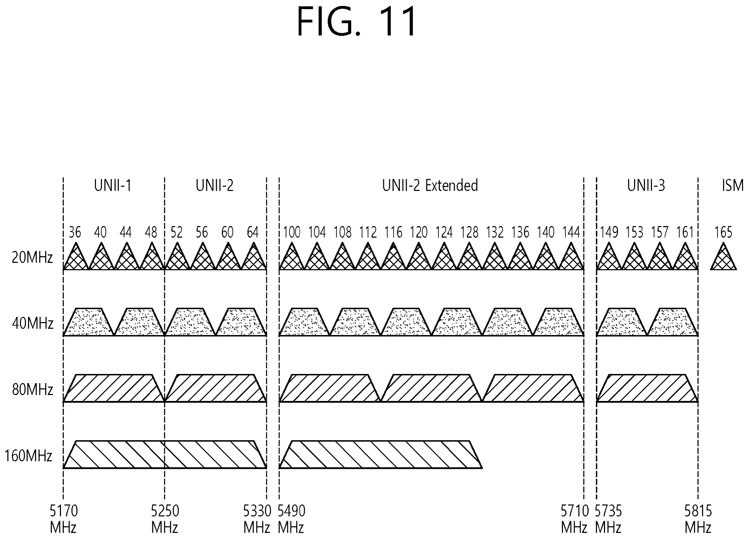

FIG. 11 illustrates an example of channels used/supported/defined within the 5 GHz band.

The 5 GHz band may be referred to by other names, such as a second band/band, etc. The 5 GHz band may refer to a frequency range in which channels with center frequencies greater than or equal to 5 GHz and less than 6 GHz (or less than 5.9 GHz) are used/supported/defined. Alternatively, the 5 GHz band may include multiple channels between 4.5 GHz and 5.5 GHz. The specific figures shown in FIG. 11 are subject to change.

Multiple channels within the 5 GHz band include Unlicensed National Information Infrastructure (UNII)-1, UNII-2, UNII-3, and ISM. UNII-1 may be referred to as UNII Low. UNII-2 may include frequency ranges called UNII Mid and UNII-2Extended. UNII-3 may be referred to as UNII-Upper.

Within the 5 GHz band, multiple channels can be configured, and the bandwidth of each channel can be variously configured, such as 20 MHz, 40 MHz, 80 MHz, or 160 MHz. For example, the 5170 MHz to 5330 MHz frequency domain/range within UNII-1 and UNII-2 can be divided into eight 20 MHz channels. The 5170 MHz to 5330 MHz frequency domain/range can be divided into four channels through a 40 MHz frequency domain. The 5170 MHz to 5330 MHz frequency domain/range can be divided into two channels through an 80 MHz frequency domain. Alternatively, the 5170 MHz to 5330 MHz frequency domain/range can be divided into one channel through a 160 MHz frequency domain.

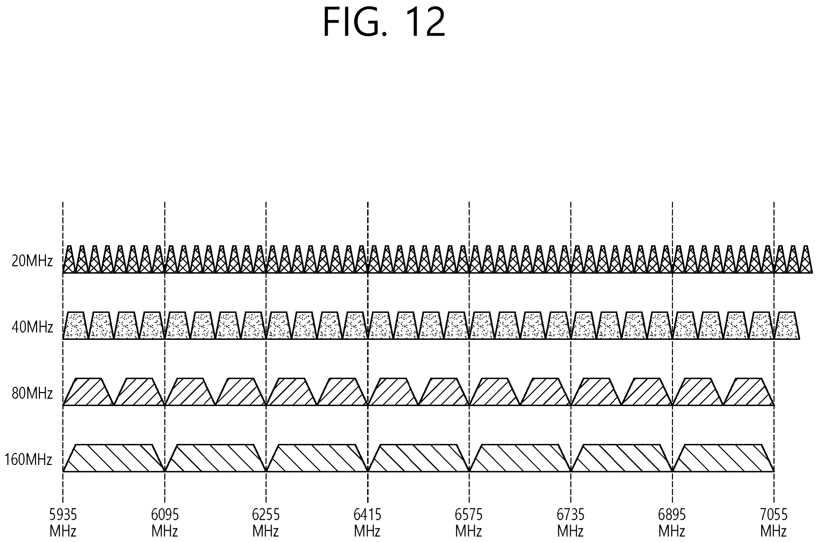

FIG. 12 illustrates an example of channels used/supported/defined within the 6 GHz band.

The 6 GHz band may be referred to by other names, such as the third band/band. The 6 GHz band may refer to a frequency range where channels with center frequencies higher than 5.9 GHz are used, supported, and defined. The specific values shown in FIG. 12 are subject to change.

For example, the 20 MHz channel in FIG. 12 may be defined starting from 5.940 GHz. Specifically, the leftmost channel among the 20 MHz channels in FIG. 12 may have an index of 1 (or channel index, channel number, etc.) and be assigned a center frequency of 5.945 GHz. In other words, the center frequency of channel index N may be determined as (5.940 + 0.005*N) GHz.

Accordingly, the indexes (or channel numbers) of the 20 MHz channels of FIG. 12 may be 1, 5, 9, 13, 17, 21, 25, 29, 33, 37, 41, 45, 49, 53, 57, 61, 65, 69, 73, 77, 81, 85, 89, 93, 97, 101, 105, 109, 113, 117, 121, 125, 129, 133, 137, 141, 145, 149, 153, 157, 161, 165, 169, 173, 177, 181, 185, 189, 193, 197, 201, 205, 209, 213, 217, 221, 225, 229, 233. Also, according to the (5.940 + 0.005*N) GHz rule mentioned above, the indexes of the 40 MHz channels in FIG. 12 may be 3, 11, 19, 27, 35, 43, 51, 59, 67, 75, 83, 91, 99, 107, 115, 123, 131, 139, 147, 155, 163, 171, 179, 187, 195, 203, 211, 219, 227.

Hereinafter, the structure and type/subtype of MAC frame are described.

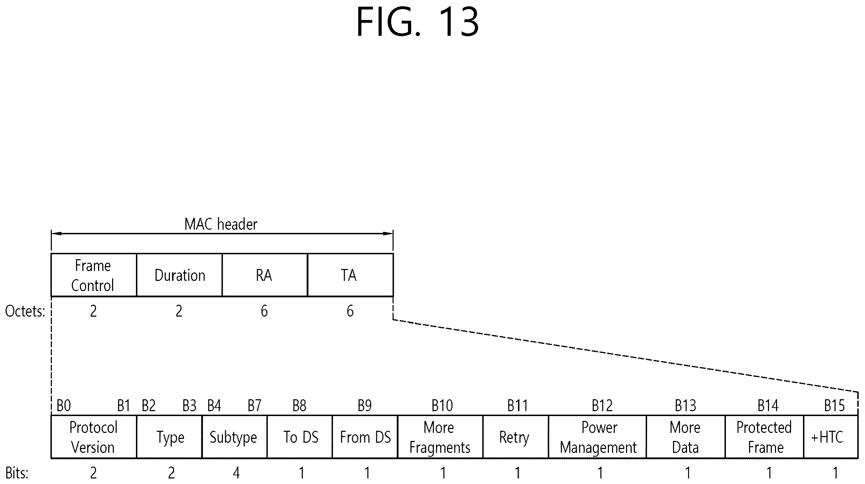

FIG. 13 shows an example of a header of a MAC frame. As shown, the MAC frame can include a frame control field/information of 2 octets in length, a duration field/information of 2 octets in length, an receiver address (RA) field/information of 6 octets in length, and a transmitter address (TA) field/information of 6 octets in length. As shown in FIG. 13, the four fields can be consecutive to each other. The MAC header of FIG. 13 can be modified in various ways, and a new field can be inserted between the four fields shown, or at least one of the fields shown can be omitted.

The MAC header shown in FIG. 13 can be located at the very front of the MAC frame. That is, the MAC frame may include a MAC header as in FIG. 13 and a MAC body field/information that is continuous to the MAC header. The MAC frame including the MAC header of FIG. 13 is inserted/included in the data field of the PPDU (e.g., UHR PPDU) illustrated in FIG. 5.

The MAC frame included in the data field of the PPDU of this disclosure may be classified into various types. For example, the MAC frame of this disclosure may be classified into a control frame, a management frame, and a data frame.

For example, the management frame includes association request, association response, reassociation request, reassociation response, probe request, probe response, beacon, disassociation, authentication, and deauthentication frames/signals defined in the conventional WLAN. For the management frame, the values of the type fields (B3 and B2) of FIG. 8 are set to 00. Also, the values of the subtype fields (B7, B6, B5, B4) of FIG. 8 are as follows: association request (0000), association response

(0001), reassociation request (0010), reassociation response (0011), probe request (0100), probe response (0101), beacon (1000), disassociation (1010), authentication (1011), deauthentication (1100).

For example, the control frame includes trigger beamforming report poll, NDP announcement (NDPA), control frame extension, control wrapper, block Ack request (BlockAckReq), Block Ack (BlockAck), PS-Poll, RTS, CTS, Ack, CF-end frames/signals defined in conventional WLAN. For the control frame, the values of the type fields (B3 and B2) of FIG. 8 are set to 01. Also, the values of the subtype fields (B7, B6, B5, B4) of FIG. 8 are as follows: trigger (0010), beamforming report poll (0100), NDP announcement (0101), control frame extension (0110), control wrapper (0111), BlockAckReq (1000), BlockAck (1001), PS-Poll (1010), RTS (1011), CTS (1100), Ack (1101), CF-End (1110).

For example, the data frame includes (QoS) Data, (QoS) Null, etc. defined in the conventional WLAN. For the management frame, the values of the type fields (B3 and B2) of FIG. 13 are set to 10.

The MAC frame/signal used in this disclosure can be identified through the type field/information and subtype field/information described above. For example, a "trigger frame" in this disclosure may mean a MAC frame in which the type bits B3 and B2 bits in the frame control field of the MAC header are set to 01, and the subtype bits B7, B6, B5, and B4 bits in the frame control field are set to 0010. Various MAC frames described in this disclosure are inserted/included in the data fields of various PPDUs (e.g., HE/VHT/HE/EHT/UHR PPDUs).

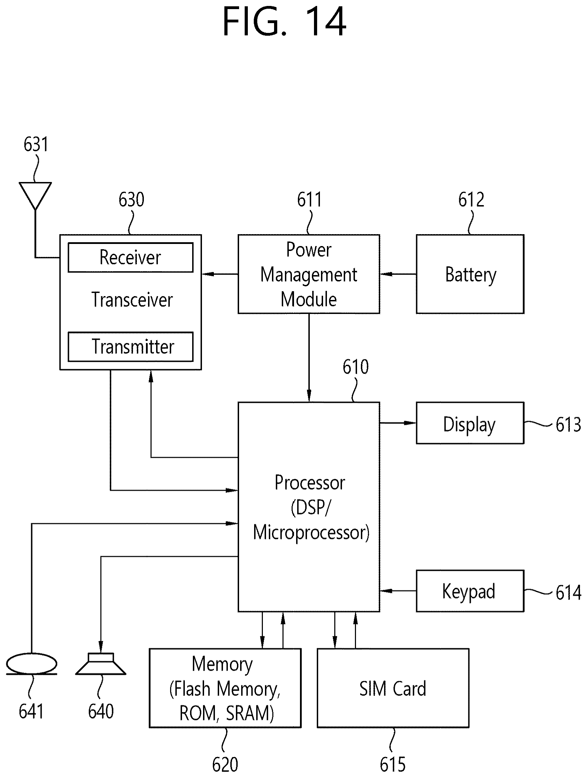

FIG. 14 shows a modified example of a transmitting device and/or a receiving device of the present disclosure.

The devices (e.g., AP STA, non-AP STA) shown in FIGS. 1 to 4 can be modified as shown in FIG. 14. The transceiver 630 of FIG. 14 can be identical to the transceiver 113, 123 of FIG. 1. The transceiver 630 of FIG. 14 can include a receiver and a transmitter.

The processor 610 of FIG. 14 can be identical to the processor 111, 121 of FIG. 1. Alternatively, the processor 610 of FIG. 14 can be identical to the processing chip 114, 124 of FIG. 1.

The memory 150 of FIG. 14 may be the same as the memory 112, 122 of FIG. 1. Alternatively, the memory 150 of FIG. 14 may be a separate external memory different from the memory 112, 122 of FIG. 1.

Referring to FIG. 14, the power management module 611 manages power for the processor 610 and/or the transceiver 630. The battery 612 supplies power to the power management module 611. The display 613 outputs the result processed by the processor 610. The keypad 614 receives input to be used by the processor 610. The keypad 614 may be displayed on the display 613. The SIM card 615 may be an integrated circuit used to securely store an international mobile subscriber identity (IMSI) and its associated keys, which are used to identify and authenticate subscribers in mobile devices such as mobile phones and computers.

Referring to FIG. 14, the speaker (640) may output sound-related results processed by the processor 610. The microphone (641) may receive sound-related input to be used by the processor 610.

Below, the trigger frame applied to this specification is described.

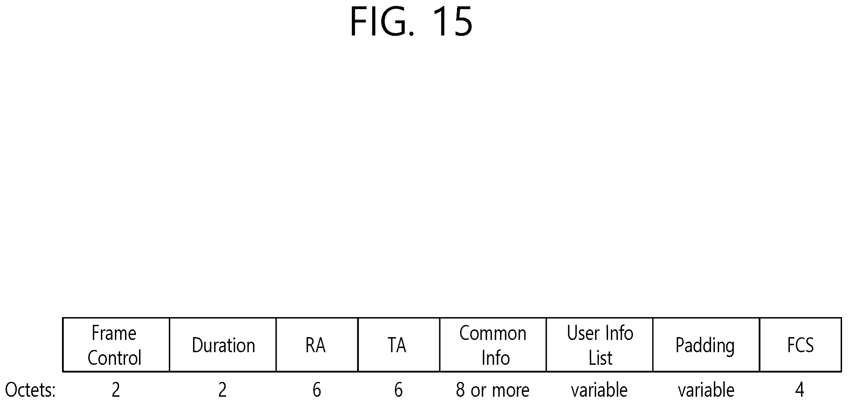

FIG. 15 illustrates an example of the Trigger Frame format.

A trigger frame other than a Multi User-Request To send (MU-RTS) trigger frame can request transmission of at least one TB PPDU and allocate resources for it. An MU-RTS trigger frame can allocate resources for at least one PPDU other than a TB PPDU. In addition, the trigger frame can convey other information requested by the responding STA to transmit a HE TB PPDU, an EHT TB PPDU, a non-HT TB PPDU, or a non-HT duplicated PPDU in response to the trigger frame.

Referring to FIG. 15, the trigger frame includes a Common Info field and a User Info List field.

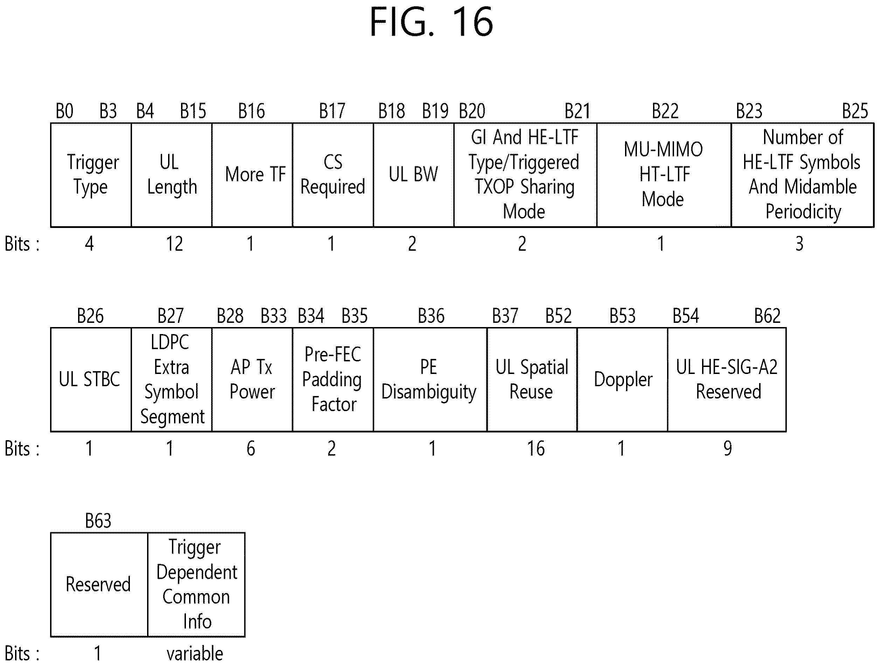

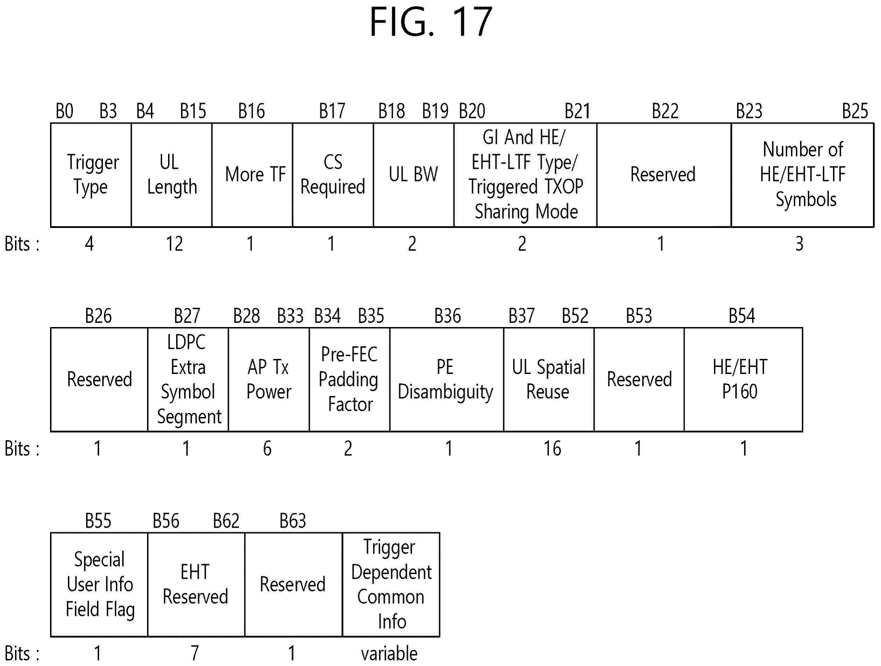

The Common Info field will be described later in FIGs. 16 and 17.

The User Info field included in the User Info List field exists in three variants: a Special User Info field, a HE variant User Info field, and an EHT variant User Info field.

Unless the trigger frame is a Multi User-Block Ack Request (MU-BAR) trigger frame, all User Info fields included in the User Info List field have the same length.

The User Info field addressed to a non-AP STA may be either a HE variant or an EHT variant. The User Info field is a HE variant addressed to a non-AP EHT STA if B39 of the User Info field is set to 0 and B54 of the Common Info field is set to 1 in the trigger frame. Otherwise, the User Info field is an EHT variant. B39 of the HE Variant User Info field is reserved for non-EHT HE STAs. B39 is set to 0 by the EHT AP for the HE variant User Info field and is a PS160 subfield for the EHT variant User Info field. The table below defines valid combinations of B54 and B55 of the Common Info field, B39 of the User Info field, the presence of the Special User Info field in the Trigger frame, variations of the User Info field, and the corresponding TB PPDU type.

**[Table 1]**

| Common Info field B54 | Common Info field B55 | User Info field B39 | Presence of Special User Info field | User Info field variant | TB PPDU type |
|---|---|---|---|---|---|
| 1 | 1 | 0 | No | HE variant | HE |
| 0 | 0 | 0 | Yes | EHT variant | EHT |
| 0 | 0 | 1 | Yes | EHT variant | EHT |
| 1 | 0 | 1 | Yes | EHT variant | EHT |
| 1 | 0 | 0 | Yes | HE variant | HE |

Although the last two rows of Table 1 above are not used by EHT APs, non-AP EHT STAs can respond to trigger frames with B54 of the Common Info field set to 1 and B55 of the Common Info field set to 0 based on the last two rows.

A non-AP HE STA that is not an EHT interprets the Common Info field as a HE variant Common Info field. A non-AP EHT STA interprets the Common Info field as a HE variant Common Info field if B54 and B55 of the Common Info field are 1. Otherwise, a non-AP EHT STA interprets the Common Info field as an EHT variant Common Info field.

FIG. 16 illustrates an example of the HE variant Common Info field format.

FIG. 17 illustrates an example of the EHT variant Common Info field format.

B53 of the EHT variant Common Info field is reserved and set to 0.

The UL HE-SIG-A2 Reserved subfield of the HE Variant Common Info field conveys the value to be included in the Reserved field within the HE-SIG-A2 subfield of the requested HE TB PPDU. Non-EHT HE APs set all UL HE-SIG-A2 Reserved subfields of the HE variant Common Info field to 1.

The HE/EHT P160 subfield of the EHT variant Common Info field is set to 0, indicating that the TB PPDU requested on the primary 160 MHz is an EHT TB PPDU. The HE/EHT P160 subfield of the EHT variant Common Info field is set to 1, indicating that the TB PPDU requested on the primary 160 MHz is an HE TB PPDU.

The Special User Info Field Flag subfield is always set to 0 in the EHT variant Common Info field. This indicates that the Special User Info field is included in the trigger frame containing the EHT variant Common Info field.

The Trigger Dependent Common Info subfield of the Common Info field is optionally present depending on the value of the Trigger Type field (basic trigger frame format and NFRP trigger frame format).

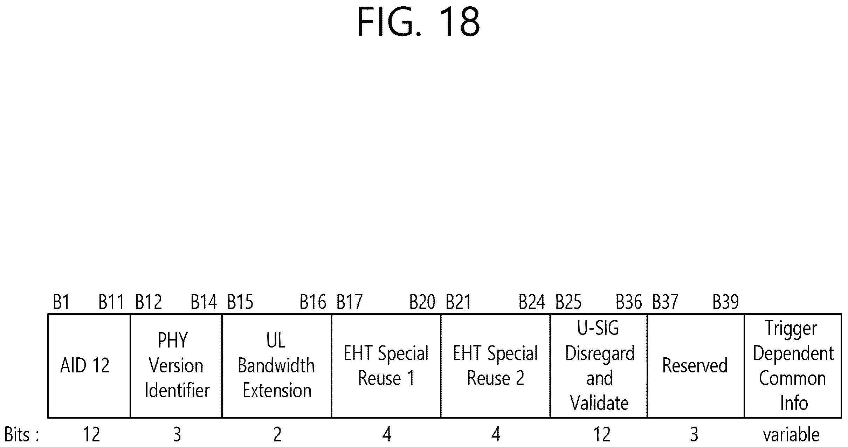

FIG. 18 illustrates an example of the Special User Info field format.

If the Special User Info field is included in the trigger frame, the Special User Info Field Present subfield of the EHT variant of the Common Info Field is set to 0; otherwise, it is set to 1.

The Special User Info field is identified by the AID12 value of 2007 and is optionally present in trigger frames generated by the EHT AP.

The Special User Info field, if present, immediately follows the Common Info field in the trigger frame and carries the nonderived subfield of the U-SIG field of the requested EHT TB PPDU, with the Special User Info Field Present subfield of the Common Info field set to 0.

The presence of the Special User Info field in the trigger frame is indicated by bit B55 of the Common Info field in the trigger frame. B55 is set to 1 to indicate the absence of the Special User Info field in the trigger frame, and is set to 0 to indicate the presence of the Special User Info field in the trigger frame immediately following the Common Info field.

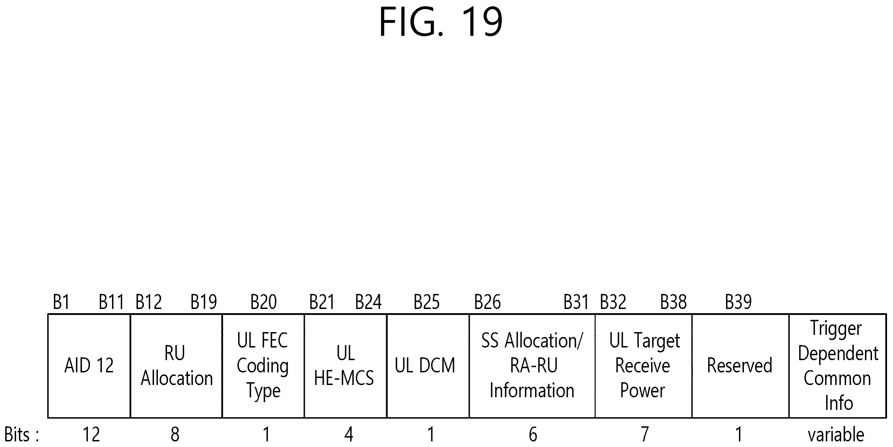

FIG. 19 illustrates an example of the HE variant User Info field format.

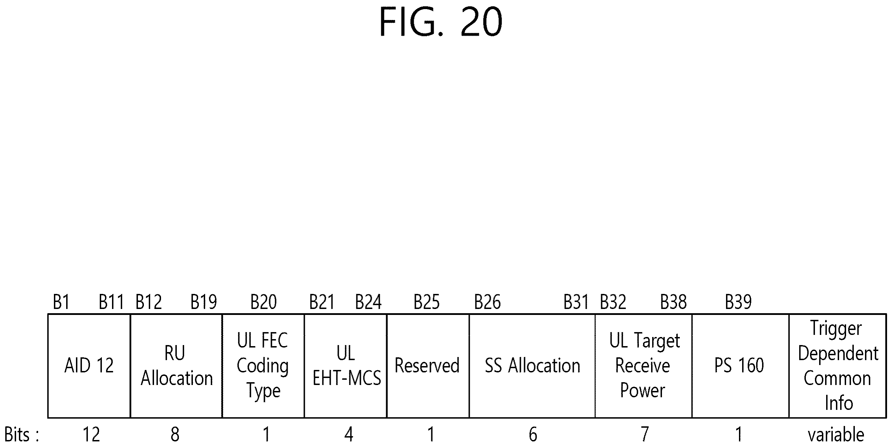

FIG. 20 illustrates an example of the EHT variant User Info field format.

The AID12 subfield of the HE/EHT variant User Info field can be set as follows:

**[Table 2]**

| AID12 subfield | Description |
|---|---|
| 0 | User Info field allocates one or more contiguous RA-RUs for associated STAs |
| 1-2007 | User Info field is addressed to an associated STA whose AID is equal to the value in the AID12 subfield |
| 2008-2044 | Reserved |
| 2045 | User Info field allocates one or more contiguous RA-RUs for unassociated STAs |
| 2046 | Unallocated RU |
| 2047-4094 | Reserved |
| 4095 | Disallowed in a User Info field as it indicates the start of the Padding field |

Below, the aggregated-PPDU (A-PPDU) applied to this specification is described.

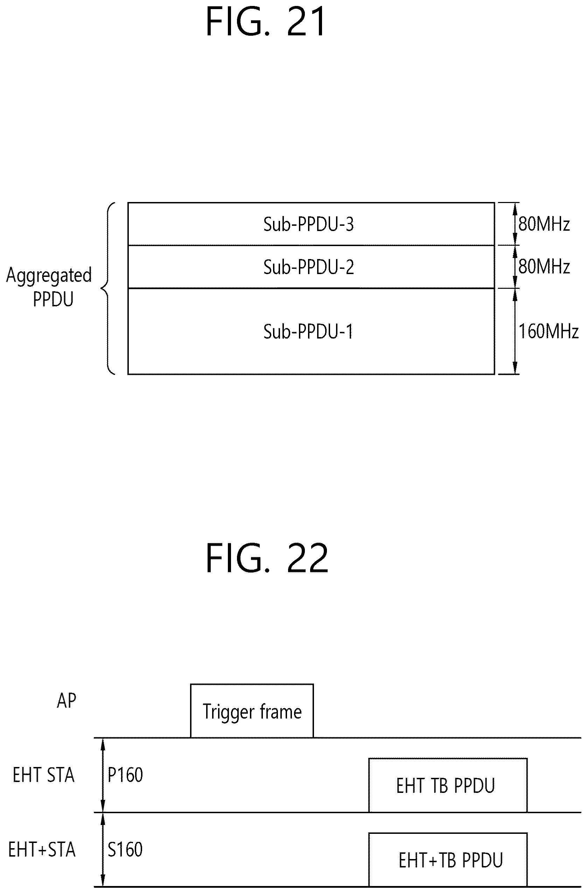

FIG. 21 illustrates an example of the A-PPDU format.

Referring to FIG. 21, an A-PPDU is composed of multiple sub-PPDUs. Each sub-PPDU occupies a non-overlapping frequency segment. The sub-PPDUs are orthogonal to each other in the frequency domain for each symbol. Each sub-PPDU may have the same or different PPDU format. The A-PPDU format may be similar to the Coordinated OFDMA format, which uses PPDUs with a small bandwidth. It is applicable to both downlink and uplink.

FIG. 21 shows an example in which the bandwidth of A-PPDU is 320 MHz, Sub-PPDU-1 is allocated to 160 MHz, Sub-PPDU-2 is allocated to 80 MHz, and Sub-PPDU-3 is allocated to 80 MHz.

### <Embodiments applicable to this specification>

To simultaneously support multiple STAs supporting multiple versions or protocols in Next Wi-Fi, an AP may configure an A-PPDU that transmits and receives signals for all STAs of each version or protocol. To transmit and receive signals from non-AP STAs supporting different versions or protocols using A-PPDUs, a proposal for a trigger frame that triggers A-PPDUs is needed. This specification proposes a method for configuring a trigger frame for soliciting A-PPDUs.

The newly defined next Wi-Fi can transmit and receive signals using an extended BW (BandWidth) of 320 MHz or more. In addition, in order to efficiently transmit and receive signals in UL using the wide BW as described above, that is, to support multiple STAs supporting different versions or protocols, signals can be transmitted and received using A-PPDU. In wide bandwidth, the AP can solicit A-PPDU using a trigger frame as follows to perform UL (Uplink) transmission simultaneously for STAs supporting HE/EHT and versions after EHT or next using A-PPDU.

For example, the AP can allocate each STA by distinguishing the protocol or version by 80/160MHz subband or subchannel unit, and can solicit UL signal transmission to each STA simultaneously through a trigger frame as shown in FIG. 22.

FIG. 22 illustrates an example of a procedure for transmitting a UL A-PPDU.

In FIG. 22, EHT+ represents UHR or next-generation Wi-Fi, defined after EHT.

As shown in FIG. 22, the AP can use a trigger frame to solicit EHT STAs and EHT+ STAs to simultaneously transmit TB PPDUs. A trigger frame for simultaneously receiving TB PPDUs from STAs supporting different versions or protocols can be configured as follows.

A trigger frame for simultaneously soliciting an A-PPDU configured of two or more different PPDUs can be configured of a common info field, a special user info field, and a user info field.

Considering backward capability, the common info field of the trigger frame for A-PPDU transmission is configured by reusing the EHT variant common info field. Instructions for A-PPDU transmission can be performed using a combination of B54 and B55 of the common info field.

For example, to indicate an A-PPDU, B54 and B55 of the common info field can be set to 1 and 0, respectively (see Table 1).

Since the last two rows of Table 1 are not used by EHT APs, a non-AP STA supporting A-PPDUs (e.g., a UHR non-AP STA) can transmit the A-PPDU in response to a trigger frame in which B54 of the Common Info field is set to 1 and B55 of the Common Info field is set to 0, based on the last two rows of Table 1.

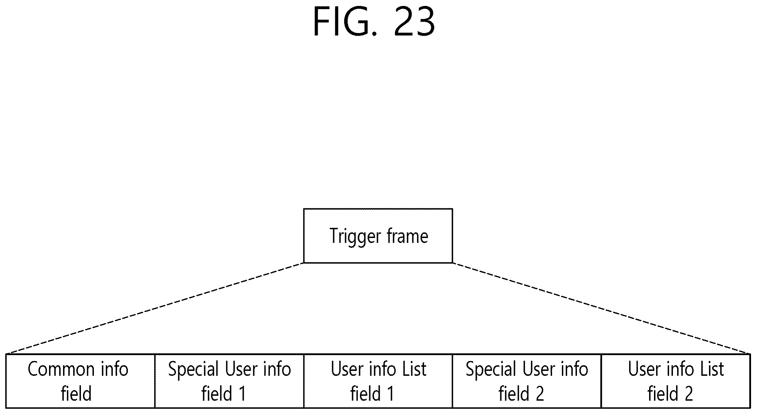

FIG. 23 illustrates an example of the configuration of a trigger frame requesting an A-PPDU including two different PPDU formats.

Referring to FIG. 23, the special user info field and user info field located after the common info field of the Trigger frame can be configured as follows:

The trigger frame can be configured with special user info fields and user info fields for each version or protocol transmitted via A-PPDU. For example, when transmitting EHT PPDU and EHT+ PPDU via A-PPDU, the trigger frame configuration is as shown in FIG. 23.

For example, when an AP solicits A-PPDU transmission using a trigger frame to simultaneously transmit and receive EHT PPDUs and EHT+ PPDUs, special user info field1 and user info list field1 may be configured as EHT variants, while special user info field2 and user info list field2 may be configured as EHT+ variants, respectively.

The AIDs included in special user info field 1 and special user info field 2 are set to the same value, and the PHY version identifier included in the special user info field can be used to indicate the variant of the special user info field.

For example, when soliciting EHT and EHT+ at the same time, the AIDs of special user info field 1 and special user info field2 are set to the value 2007 to indicate the special user info field. In addition, to indicate the variant or version, the PHY version identifier field included in special user info field1 is set to 0 to indicate EHT, and the PHY version identifier field included in special user info field2 is set to one of the values 1 or greater to indicate EHT+.

As described above, by configuring a trigger frame with a special user info field and a user info list field for each variant that is triggered simultaneously, even if the STA receives a trigger frame that solicits an A-PPDU, the STA can transmit a TB PPDU by performing the reception operation of the existing trigger frame, so there is an advantage that no additional procedure is required and complexity does not increase. However, there is a disadvantage that the STA may take longer to find the user info field assigned to it or may have to perform the decoding of other user fields to the end without stopping, which increases the decoding time.

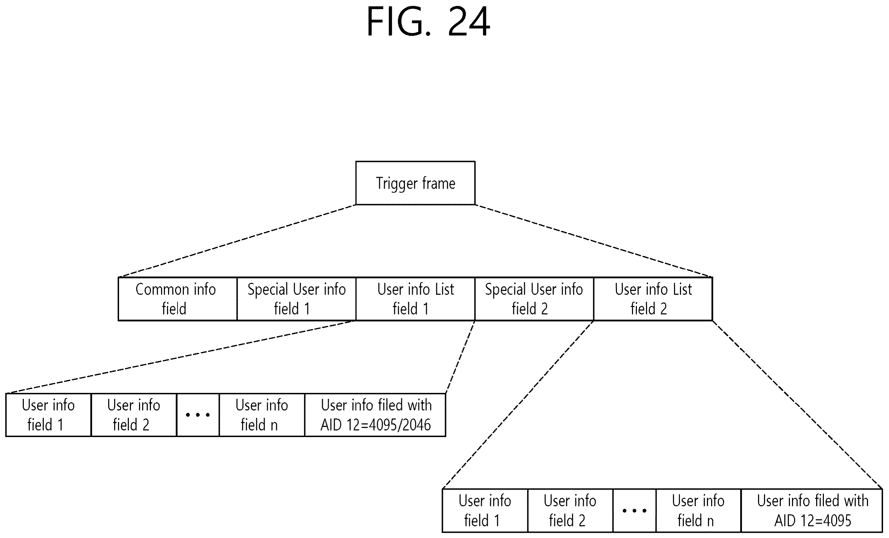

FIG. 24 illustrates another example of the configuration of a trigger frame requesting an A-PPDU including two different PPDU formats.

In order to prevent decoding of all user info fields included in the trigger frame as described above, when soliciting two or more PPDU formats or PPDU versions, the last user info field of the user info field list corresponding to the first PPDU format or version can be set as shown in FIG. 24. This allows an STA that finds its own user info field in the variant to no longer perform decoding.

Referring to FIG. 24, User info field 1 to User info field n for EHT STA 1 to EHT STA n corresponding to the EHT variant and user info List field 1 with the User info field added at the end may be included in the trigger frame, and User info field 1 to User info field n for EHT+ STA 1 to EHT+ STA n corresponding to the EHT+ (or UHR) variant and user info List field 2 with the User info field added at the end may be included in the trigger frame.
1) The AP sets the AID of the last user info field included in the user info list that solicits an individual PPDU format or PPDU version to 4095. At this time, the last user info field added is a field that is additionally defined regardless of the STA. Although it has the disadvantage of generating frame overhead, it is proposed in that it has the effect of reducing unnecessary decoding of the STA.
   - As described above, by setting the AID of the last user info field included in the user info list of each variant to 4095, an STA transmitting a signal using the variant is indicated that there is no longer a user field for the variant, thereby preventing the STA using the variant from performing decoding of the user info fields for other variants that follow. For example, EHT STA 1 to EHT STA n may confirm that the AID value of the last User info field included in user info List field1 is 4095 and may not decode user info List field2.
   - That is, an STA that has identified a user field for itself in user info list field1 recognizes that there are no more user info fields after decoding the last user info field and does not perform any more decoding.
   - In this case, if the A-PPDU indicator of the trigger common field indicates that an A-PPDU transmission is performed, even if the AID of the last user info field of the user info list field1 is set to 4095, the STA that has not identified its own AID in the user info list field1 ignores the AID value of the last user info field and performs decoding on the user info fields that follow (i.e., special user info field2 and user info list field2) to find the user info field assigned to it. For example, since EHT+ STA 1 to EHT+ STA n cannot identify its own AID in the user info List field1 corresponding to the EHT variant, even if it confirms that the AID value of the last User info field included in the user info List field1 is 4095, it can decode the user info List field2 (i.e., EHT+ STA 1 to EHT+ STA n can sequentially decode until it finds its own variant).
   - An STA that finds its own user field in the variant no longer performs decoding on the user field when the AID of the last user info field in the user info list field of the variant is set to 4095.
2) Unlike the above, the AID of the last user info field of the user info list field that solicits the first PPDU format or version is set to 2046 to indicate that there are no more RUs allocated for the variant, thereby preventing the STA using the variant from performing decoding for the user field any longer.
   - In this case, when the AID is set to 2046, the RU allocation field of the corresponding user info field is set to a value indicating the remaining RUs or subchannels excluding the RUs or subchannels allocated to the PPDU to be transmitted using the corresponding variant in the BW. When the value of the last user info field is set as described above, it can be used to indicate that the remaining bands other than the band allocated to the corresponding variant are not unused but will be used by other variants.

A trigger frame configured according to the two configuration methods (1) and 2) described above can be configured as shown in FIG. 24.

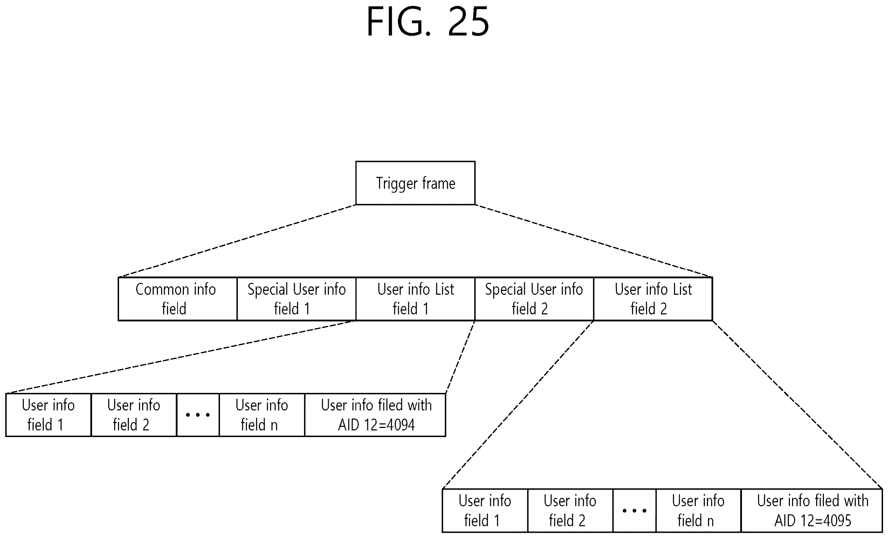

FIG. 25 illustrates another example of the configuration of a trigger frame requesting an A-PPDU including two different PPDU formats.

Referring to FIG. 25, User info field 1 to User info field n for EHT STA 1 to EHT STA n corresponding to the EHT variant and User info List field 1 with User info field added at the end may be included in the trigger frame, and User info field 1 to User info field n for EHT+ STA 1 to EHT+ STA n corresponding to the EHT+ (or UHR) variant and User info List field 2 with User info field added at the end may be included in the trigger frame.

Alternatively, a method other than that of FIG. 24 could be proposed to indicate that the user info field for a new variant begins at the same time as the user info field for that variant ends by using a single reserved AID value.
- The AID value for indicating the above-mentioned content can be set to one of the reserved values 2008-2044 or 2047-4094 (see Table 2). For example, the value 4094 can be assigned.
- When soliciting two or more PPDU formats or versions simultaneously using a trigger frame, the last user info field of the user info list field for the first or earlier PPDU format or version variant is configured as follows.
- The AID of the last user info field is set to 4094, indicating that this is the last user info field for the variant and that there are user info fields for other variants following it.
- An STA that has identified its own AID in the user info list field of the variant may no longer perform decoding on user info fields that exist after the user info field if it receives or decodes a user info field with AID = 4094. For example, EHT STA 1 to EHT STA n may confirm that the AID value of the last user info field included in user info List field1 is 4094 and may not decode user info List field2.

Additionally, an STA supporting the PPDU of that version that fails to identify its own AID in the user info list field of that variant may no longer perform decoding for any user info fields that exist thereafter. For example, if an STA supporting EHT fails to identify its own AID in user field list field1, it may determine that the AID value of the last User info field is 4094 and may not decode User Info List field2.
- On the other hand, STAs that have not identified their own AID in the user info list field of the variant (here, STAs can be regarded as STAs that support all variants) recognize the existence of user info list fields for other variants through the last user info field and perform decoding on the user info fields that follow. For example, EHT+ STA 1 to EHT+ STA n, since they have not identified their own AID in the user info List field1 corresponding to the EHT variant, can confirm that the AID value of the last User info field included in the user info List field1 is 4094 and decode the user info List field2 that follows (i.e., EHT+ STA 1 to EHT+ STA n can sequentially decode until they find their own variant).
- A trigger frame configured as above can be configured as shown in FIG. 25.

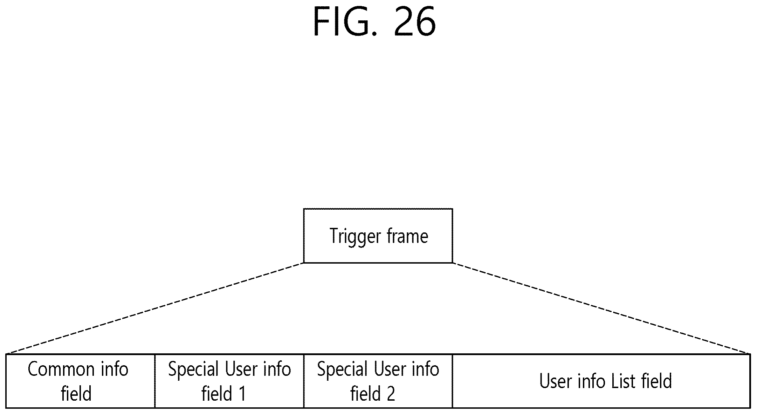

FIG. 26 illustrates another example of the configuration of a trigger frame requesting an A-PPDU including two different PPDU formats.

Referring to FIG. 26, the trigger frame may include Special User Info field1 for EHT STA 1 to EHT STA n corresponding to the EHT variant, Special User Info field2 for EHT+ STA 1 to EHT+ STA n corresponding to the EHT+ variant, and User info List field for EHT/EHT+ STA 1 to EHT/EHT+ STA n for both EHT/EHT+ variants.

That is, unlike FIGS. 24 and 25, when soliciting two or more PPDU formats or versions without configuring user info fields (special user info field + user info list field) for each variant, the Trigger frame can be configured so that the special user info fields for the triggering PPDU format or version come first, followed by the user info list field, as shown below.

As shown in FIG. 26, special user info fields for two or more PPDU formats or versions solicited through a trigger frame are configured to come before the user info list field following the common info field.
- When special user info fields are sequentially placed before the user info list field, the AID of the special user info field corresponding to each variant can be set to a different AID to eliminate ambiguity or misunderstanding by the STA.
- For example, when soliciting two PPDU formats, namely the EHT variant and the EHT+ (i.e., UHR) variant, the AID of the special user info field for the EHT variant is set to 2007, and the AID for the EHT+ (i.e., UHR) variant is set to 2006, allowing the STA to distinguish the variants.
- As described above, the AID for each variant's special user info field is set to a different value, allowing the STA to distinguish variants through the AID. In this case, the STA can also recognize which PPDU format or version is being solicited simultaneously with the A-PPDU.
- However, the AID used in the special user info field cannot be used by the STA, which reduces the number of AIDs available to the STA.

To mitigate this drawback, the PHY identifier field of the special user field can be utilized, and the special user info field values of each variant of the trigger frame soliciting the A-PPDU can be set differently.

For example, the values of the PHY identifier field of the special user field for the EHT variant and the EHT+ (i.e., UHR) variant are set to 0 and 1, respectively, allowing the STA to distinguish the variants based on these values.

When special user info fields are placed before the user info list field, the user info fields for each variant included in the user info list field can be configured without restriction.
- In this case, each user info field may include indicator information indicating which PPDU format or version the user info field solicits.

For example, when soliciting two PPDU formats or versions using a Trigger frame, B25 of the user info field can be used for the indicator information. B25 can be set to 0 to indicate that it is the PPDU format or version corresponding to the first special user info field, and B25 can be set to 1 to indicate that the corresponding user info field corresponds to the PPDU format or version corresponding to the second special user info field.
- When soliciting three or more PPDU formats or versions using a Trigger frame, the Trigger Dependent User Info field can be used to indicate these. In this case, bits 2/3 included in the Trigger Dependent User Info field can be used to indicate three or more PPDU formats or versions.

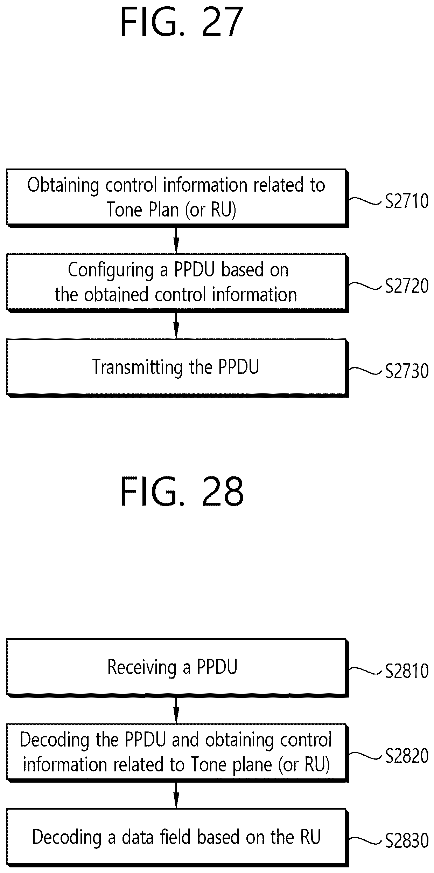

FIG. 27 is a flowchart illustrating the operation of a transmitting device according to the present embodiment.

The example of FIG. 27 may be performed by a transmitting device (AP and/or non-AP STA).

Some of each step (or detailed sub-step to be described later) of the example of FIG. 27 may be skipped/omitted.

Through step S2710, the transmitting device (transmitting STA) may obtain information about the above-described tone plan. As described above, the information about the tone plan includes the size and location of the RU, control information related to the RU, information about a frequency band including the RU, information about an STA receiving the RU, and the like.

Through step S2720, the transmitting device may construct/generate a PPDU based on the acquired control information. Configuring/generating the PPDU may include configuring/generating each field of the PPDU. That is, step S2720 includes configuring the EHT-SIG field including control information about the tone plan. That is, step S2720 includes configuring a field including control information (e.g., N bitmap) indicating the size/position of the RU; and/or configuring a field including an identifier of an STA receiving the RU (e.g., AID).

Also, step S2720 may include generating an STF/LTF sequence transmitted through a specific RU. The STF/LTF sequence may be generated based on a preset STF generation sequence/LTF generation sequence.

Also, step S2720 may include generating a data field (i.e., MPDU) transmitted through a specific RU.

The transmitting device may transmit the PPDU constructed through step S2720 to the receiving device based on step S2730.

While performing step S2730, the transmitting device may perform at least one of operations such as CSD, Spatial Mapping, IDFT/IFFT operation, and GI insertion.

A signal/field/sequence constructed according to the present specification may be transmitted in the form of FIG. 5.

FIG. 28 is a flowchart illustrating the operation of the receiving apparatus/device according to the present embodiment.

The aforementioned PPDU may be received according to the example of FIG. 28.

The example of FIG. 28 may be performed by a receiving apparatus/device (AP and/or non-AP STA).

Some of each step (or detailed sub-step to be described later) of the example of FIG. 28 may be skipped/omitted.

The receiving device (receiving STA) may receive all or part of the PPDU through step S2810. The received signal may be in the form of FIG. 5.

A sub-step of step S2810 may be determined based on step S2730 of FIG. 27. That is, in step S2810, an operation of restoring the result of the CSD, Spatial Mapping, IDFT/IFFT operation, and GI insertion operation applied in step S2730 may be performed.

In step S2820, the receiving device may perform decoding on all/part of the PPDU. Also, the receiving device may obtain control information related to a tone plan (i.e., RU) from the decoded PPDU.

More specifically, the receiving device may decode the L-SIG and EHT-SIG of the PPDU based on the legacy STF/LTF and obtain information included in the L-SIG and EHT SIG fields. Information on various tone plans (i.e., RUs) described in this specification may be included in the EHT-SIG, and the receiving STA may obtain information on the tone plan (i.e., RU) through the EHT-SIG.

In step S2830, the receiving device may decode the remaining part of the PPDU based on information about the tone plan (i.e., RU) acquired through step S2820. For example, the receiving STA may decode the STF/LTF field of the PPDU based on information about one plan (i.e., RU). In addition, the receiving STA may decode the data field of the PPDU based on information about the tone plan (i.e., RU) and obtain the MPDU included in the data field.

In addition, the receiving device may perform a processing operation of transferring the data decoded through step S2830 to a higher layer (e.g., MAC layer). In addition, when generation of a signal is instructed from the upper layer to the PHY layer in response to data transmitted to the upper layer, a subsequent operation may be performed.

Hereinafter, the above-described embodiment will be described with reference to FIG. 1 to FIG. 28.

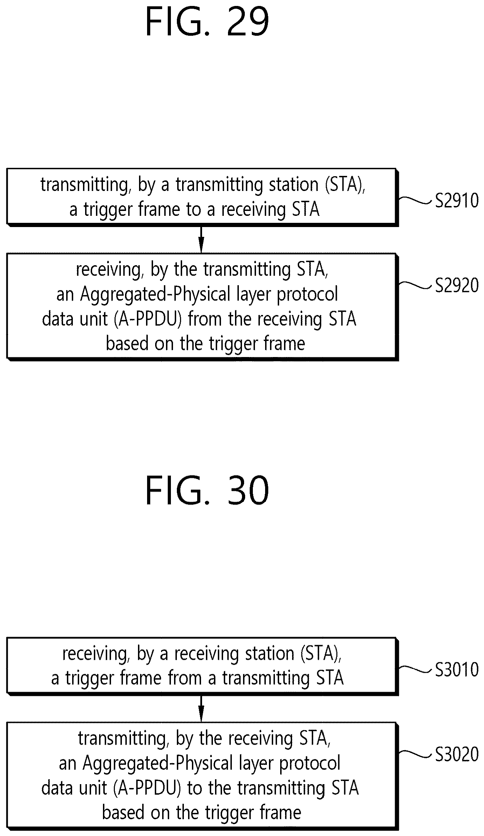

FIG. 29 is a flowchart illustrating a procedure for receiving an A-PPDU according to the present embodiment.

The example of FIG. 29 may be performed in a network environment that supports a next-generation wireless LAN system (Ultra High Reliability (UHR) wireless LAN system or next Wi-Fi). The next-generation wireless LAN system is an improved version of the 802.11be system and can satisfy backward compatibility with the 802.11be system.

The example of FIG. 29 is performed at a transmitting STA, which may correspond to an access point (AP). The receiving STA of FIG. 29 may correspond to at least one STA (station).

This embodiment proposes a method for defining a trigger frame for triggering an A-PPDU, which is an aggregate of PPDUs supporting different versions or protocols. In particular, this embodiment proposes a method for setting the user information field of the trigger frame so that a receiving STA that has identified its own user information field in a specific variant does not perform additional decoding.

In step S2910, a transmitting station (STA) transmits a trigger frame to a receiving STA.

In step S2920, the transmitting STA receives an Aggregated-Physical layer protocol data unit (A-PPDU) from the receiving STA based on the trigger frame.

The trigger frame includes a common information field, first and second special user information fields, and first and second user information list fields.

The A-PPDU includes a first PPDU for a primary channel and a second PPDU for a secondary channel. The primary channel may be a primary 160 MHz, and the secondary channel may be a secondary 160 MHz.

The first special user information field and the first user information list field are variant fields for the first PPDU. The second special user information field and the second user information list field are variant fields for the second PPDU.

The first PPDU may be an Extreme High Throughput (EHT) Trigger Based (TB) PPDU. The second PPDU may be an Ultra High Reliability (UHR) TB PPDU. That is, the first special user information field and the first user information list field may be EHT variant fields, and the second special user information field and the second user information list field may be UHR variant fields.

The first user information list field includes first and second user information fields.

The first user information field may be a user information field for at least one receiving STA to which the first PPDU is allocated. The second user information field may be the last user information field located after the first user information field. For example, if the number of at least one receiving STA to which the first PPDU is allocated is n, there may be n user information fields, followed by one additional user information field (the second user information field).

When/Based on an Association Identifier (AID) of the second user information field is/being set to 4095, the second user information field may include information that there is no longer a user information field in the variant field for the first PPDU.

That is, the present embodiment has the effect of setting the AID value by inserting the second user information field into the variant field (EHT variant field) for the first PPDU, so that when the receiving STA has decoded its own user information field in the first user information field (EHT variant User Info field), it can no longer decode other user information fields. This has the effect of preventing unnecessary decoding by the receiving STA, thereby improving the efficiency and throughput of the uplink transmission of the receiving STA.

A specific description of the above embodiment is as follows.

The trigger frame may be composed of the common information field, the first special user information field, the first user information list field, the second special user information field, and the second user information list field in that order.

At this time, if/based on the receiving STA is/being an EHT non-AP STA, the EHT non-AP STA not only decodes the first special user information field and the first user information list field, which are its own variant (EHT variant), but also decodes the second special user information field and the second user information list field, which are not its own variant (UHR variant), so there may be a problem that the decoding time becomes longer due to unnecessary decoding.

Accordingly, by additionally inserting the second user information field at the end of the first user information list field, the receiving STA may confirm that there are no more user information fields in its variant and not decode subsequent fields. That is, when/based on the receiving STA is/being an EHT non-AP STA, the receiving STA may not decode the second special user information field and the second user information list field after decoding the second user information field. In this case, an AID of the user information field for the at least one receiving STA to which the first PPDU is allocated may include an AID of the EHT non-AP STA.

The second user information list field may include third and fourth user information fields.

The third user information field may be a user information field for at least one receiving STA to which the second PPDU is allocated. The fourth user information field may be the last user information field after the third user information field.

Based on an AID of the fourth user information field being set to 4095, the fourth user information field may include information that there is no longer a user information field in the variant field for the second PPDU.

If/Based on the receiving STA is/being a UHR non-AP STA, the receiving STA may decode the second special user information field and the second user information list field even if the receiving STA decodes the second user information field. At this time, an AID of the user information field for at least one receiving STA to which the first PPDU is allocated may not include an AID of the UHR non-AP STA. This explains that since the UHR non-AP STA has not identified its own AID in the first user information list field, it decodes the fields that follow even if the receiving STA decodes the second user information field. However, if an AID of the user information field for the at least one receiving STA to which the second PPDU is allocated includes the AID of the UHR non-AP STA and the receiving STA has decoded its own user information field in the second user information field (UHR variant User Info field), the receiving STA may not decode any other user information fields after decoding the fourth user information field.

The common information field may be configured by reusing an EHT variant common information field. The common information field may include B54 bit and B55 bit. Based on the B54 bit being set to 1 and the B55 bit being set to 0, the trigger frame may be set as a frame that triggers the A-PPDU.

AIDs of the first and second special user information fields may be set to 2007.

Based on a PHY (Physical) version identifier field of the first special user information field being set to 0, the first special user information field includes information indicating that it is the variant field (EHT variant field) for the first PPDU.

Based on a PHY version identifier field of the second special user information field being set to one of 1 or more values, the second special user information field includes information indicating that it is the variant field (UHR variant field) for the second PPDU.

Based on the AID of the second user information field being set to 2046, the second user information field includes information that there are no more Resource Units (RUs) or subchannels allocated for the first PPDU.

The second user information field may include an RU allocation field. At this time, the RU allocation field may include allocation information for remaining RUs or subchannels excluding the RUs or subchannels to which the first PPDU is allocated in a bandwidth of the A-PPDU. By setting the RU allocation field of the second user information field as described above, the transmitting STA may inform the receiving STA that a secondary channel other than a primary channel to which the first PPDU is allocated will be used by a different variant (UHR variant).

FIG. 30 is a flowchart illustrating a procedure for transmitting an A-PPDU according to the present embodiment.

The example of FIG. 30 may be performed in a network environment that supports a next-generation wireless LAN system (Ultra High Reliability (UHR) wireless LAN system or next Wi-Fi). The next-generation wireless LAN system is an improved version of the 802.11be system and can satisfy backward compatibility with the 802.11be system.

The example of FIG. 30 is performed at a receiving STA, which may correspond to at least one station (STA). The transmitting STA of FIG. 30 may correspond to an access point (AP).

This embodiment proposes a method for defining a trigger frame for triggering an A-PPDU, which is an aggregate of PPDUs supporting different versions or protocols. In particular, this embodiment proposes a method for setting the user information field of the trigger frame so that a receiving STA that has identified its own user information field in a specific variant does not perform additional decoding.

In step S3010, a receiving station (STA) receives a trigger frame from a transmitting STA.

In step S3020, the receiving STA transmits an Aggregated-Physical layer protocol data unit (A-PPDU) to the transmitting STA based on the trigger frame.

The trigger frame includes a common information field, first and second special user information fields, and first and second user information list fields.

The A-PPDU includes a first PPDU for a primary channel and a second PPDU for a secondary channel. The primary channel may be a primary 160 MHz, and the secondary channel may be a secondary 160 MHz.

The first special user information field and the first user information list field are variant fields for the first PPDU. The second special user information field and the second user information list field are variant fields for the second PPDU.

The first PPDU may be an Extreme High Throughput (EHT) Trigger Based (TB) PPDU. The second PPDU may be an Ultra High Reliability (UHR) TB PPDU. That is, the first special user information field and the first user information list field may be EHT variant fields, and the second special user information field and the second user information list field may be UHR variant fields.

The first user information list field includes first and second user information fields.

The first user information field may be a user information field for at least one receiving STA to which the first PPDU is allocated. The second user information field may be the last user information field located after the first user information field. For example, if the number of at least one receiving STA to which the first PPDU is allocated is n, there may be n user information fields, followed by one additional user information field (the second user information field).

When/Based on an Association Identifier (AID) of the second user information field is/being set to 4095, the second user information field may include information that there is no longer a user information field in the variant field for the first PPDU.

That is, the present embodiment has the effect of setting the AID value by inserting the second user information field into the variant field (EHT variant field) for the first PPDU, so that when the receiving STA has decoded its own user information field in the first user information field (EHT variant User Info field), it can no longer decode other user information fields. This has the effect of preventing unnecessary decoding by the receiving STA, thereby improving the efficiency and throughput of the uplink transmission of the receiving STA.

A specific description of the above embodiment is as follows.

The trigger frame may be composed of the common information field, the first special user information field, the first user information list field, the second special user information field, and the second user information list field in that order.

At this time, if/based on the receiving STA is/being an EHT non-AP STA, the EHT non-AP STA not only decodes the first special user information field and the first user information list field, which are its own variant (EHT variant), but also decodes the second special user information field and the second user information list field, which are not its own variant (UHR variant), so there may be a problem that the decoding time becomes longer due to unnecessary decoding.

Accordingly, by additionally inserting the second user information field at the end of the first user information list field, the receiving STA may confirm that there are no more user information fields in its variant and not decode subsequent fields. That is, when/based on the receiving STA is/being an EHT non-AP STA, the receiving STA may not decode the second special user information field and the second user information list field after decoding the second user information field. In this case, an AID of the user information field for the at least one receiving STA to which the first PPDU is allocated may include an AID of the EHT non-AP STA.

The second user information list field may include third and fourth user information fields.

The third user information field may be a user information field for at least one receiving STA to which the second PPDU is allocated. The fourth user information field may be the last user information field after the third user information field.

Based on an AID of the fourth user information field being set to 4095, the fourth user information field may include information that there is no longer a user information field in the variant field for the second PPDU.

If/Based on the receiving STA is/being a UHR non-AP STA, the receiving STA may decode the second special user information field and the second user information list field even if the receiving STA decodes the second user information field. At this time, an AID of the user information field for at least one receiving STA to which the first PPDU is allocated may not include an AID of the UHR non-AP STA. This explains that since the UHR non-AP STA has not identified its own AID in the first user information list field, it decodes the fields that follow even if the receiving STA decodes the second user information field. However, if an AID of the user information field for the at least one receiving STA to which the second PPDU is allocated includes the AID of the UHR non-AP STA and the receiving STA has decoded its own user information field in the second user information field (UHR variant User Info field), the receiving STA may not decode any other user information fields after decoding the fourth user information field.

The common information field may be configured by reusing an EHT variant common information field. The common information field may include B54 bit and B55 bit. Based on the B54 bit being set to 1 and the B55 bit being set to 0, the trigger frame may be set as a frame that triggers the A-PPDU.

AIDs of the first and second special user information fields may be set to 2007.

Based on a PHY (Physical) version identifier field of the first special user information field being set to 0, the first special user information field includes information indicating that it is the variant field (EHT variant field) for the first PPDU.

Based on a PHY version identifier field of the second special user information field being set to one of 1 or more values, the second special user information field includes information indicating that it is the variant field (UHR variant field) for the second PPDU.

Based on the AID of the second user information field being set to 2046, the second user information field includes information that there are no more Resource Units (RUs) or subchannels allocated for the first PPDU.

The second user information field may include an RU allocation field. At this time, the RU allocation field may include allocation information for remaining RUs or subchannels excluding the RUs or subchannels to which the first PPDU is allocated in a bandwidth of the A-PPDU. By setting the RU allocation field of the second user information field as described above, the transmitting STA may inform the receiving STA that a secondary channel other than a primary channel to which the first PPDU is allocated will be used by a different variant (UHR variant).

### < Device configuration>

The technical features of the present disclosure may be applied to various devices and methods. For example, the technical features of the present disclosure may be performed/supported through the device(s) of FIG. 1 and/or FIG. 14. For example, the technical features of the present disclosure may be applied to only part of FIG. 1 and/or FIG. 14. For example, the technical features of the present disclosure may be implemented based on the processing chip(s) 114 and 124 of FIG. 1, or implemented based on the processor(s) 111 and 121 and the memory(s) 112 and 122, or implemented based on the processor 610 and the memory 620 of FIG. 14. For example, the device according to the present disclosure receives a trigger frame from a transmitting station (STA); and transmits an Aggregated-Physical layer protocol data unit (A-PPDU) to the transmitting STA based on the trigger frame.

The technical features of the present disclosure may be implemented based on a computer readable medium (CRM). For example, a CRM according to the present disclosure is at least one computer readable medium including instructions designed to be executed by at least one processor.

The CRM may store instructions that perform operations including receiving a trigger frame from a transmitting station (STA); and transmitting an Aggregated-Physical layer protocol data unit (A-PPDU) to the transmitting STA based on the trigger frame. At least one processor may execute the instructions stored in the CRM according to the present disclosure. At least one processor related to the CRM of the present disclosure may be the processor 111, 121 of FIG. 1, the processing chip 114, 124 of FIG. 1, or the processor 610 of FIG. 14. Meanwhile, the CRM of the present disclosure may be the memory 112, 122 of FIG. 1, the memory 620 of FIG. 14, or a separate external memory/storage medium/disk.

The foregoing technical features of the present specification are applicable to various applications or business models. For example, the foregoing technical features may be applied for wireless communication of a device supporting artificial intelligence (AI).

Artificial intelligence refers to a field of study on artificial intelligence or methodologies for creating artificial intelligence, and machine learning refers to a field of study on methodologies for defining and solving various issues in the area of artificial intelligence. Machine learning is also defined as an algorithm for improving the performance of an operation through steady experiences of the operation.

An artificial neural network (ANN) is a model used in machine learning and may refer to an overall problem-solving model that includes artificial neurons (nodes) forming a network by combining synapses. The artificial neural network may be defined by a pattern of connection between neurons of different layers, a learning process of updating a model parameter, and an activation function generating an output value.

The artificial neural network may include an input layer, an output layer, and optionally one or more hidden layers. Each layer includes one or more neurons, and the artificial neural network may include synapses that connect neurons. In the artificial neural network, each neuron may output a function value of an activation function of input signals input through a synapse, weights, and deviations.

A model parameter refers to a parameter determined through learning and includes a weight of synapse connection and a deviation of a neuron. A hyper-parameter refers to a parameter to be set before learning in a machine learning algorithm and includes a learning rate, the number of iterations, a mini-batch size, and an initialization function.

Learning an artificial neural network may be intended to determine a model parameter for minimizing a loss function. The loss function may be used as an index for determining an optimal model parameter in a process of learning the artificial neural network.

Machine learning may be classified into supervised learning, unsupervised learning, and reinforcement learning.

Supervised learning refers to a method of training an artificial neural network with a label given for training data, wherein the label may indicate a correct answer (or result value) that the artificial neural network needs to infer when the training data is input to the artificial neural network. Unsupervised learning may refer to a method of training an artificial neural network without a label given for training data. Reinforcement learning may refer to a training method for training an agent defined in an environment to choose an action or a sequence of actions to maximize a cumulative reward in each state.

Machine learning implemented with a deep neural network (DNN) including a plurality of hidden layers among artificial neural networks is referred to as deep learning, and deep learning is part of machine learning. Hereinafter, machine learning is construed as including deep learning.

The foregoing technical features may be applied to wireless communication of a robot.

Robots may refer to machinery that automatically process or operate a given task with own ability thereof. In particular, a robot having a function of recognizing an environment and autonomously making a judgment to perform an operation may be referred to as an intelligent robot.

Robots may be classified into industrial, medical, household, military robots and the like according uses or fields. A robot may include an actuator or a driver including a motor to perform various physical operations, such as moving a robot joint. In addition, a movable robot may include a wheel, a brake, a propeller, and the like in a driver to run on the ground or fly in the air through the driver.

The foregoing technical features may be applied to a device supporting extended reality.

Extended reality collectively refers to virtual reality (VR), augmented reality (AR), and mixed reality (MR). VR technology is a computer graphic technology of providing a real-world object and background only in a CG image, AR technology is a computer graphic technology of providing a virtual CG image on a real object image, and MR technology is a computer graphic technology of providing virtual objects mixed and combined with the real world.

MR technology is similar to AR technology in that a real object and a virtual object are displayed together. However, a virtual object is used as a supplement to a real object in AR technology, whereas a virtual object and a real object are used as equal statuses in MR technology.

XR technology may be applied to a head-mount display (HMD), a head-up display (HUD), a mobile phone, a tablet PC, a laptop computer, a desktop computer, a TV, digital signage, and the like. A device to which XR technology is applied may be referred to as an XR device.

The claims recited in the present specification may be combined in a variety of ways. For example, the technical features of the method claims of the present specification may be combined to be implemented as a device, and the technical features of the device claims of the present specification may be combined to be implemented by a method. In addition, the technical characteristics of the method claim of the present specification and the technical characteristics of the device claim may be combined to be implemented as a device, and the technical characteristics of the method claim of the present specification and the technical characteristics of the device claim may be combined to be implemented by a method.

## Claims

1. A method in a wireless local area network (WLAN) system, the method comprising:
receiving, by a receiving station (STA), a trigger frame from a transmitting STA; and
transmitting, by the receiving STA, an Aggregated-Physical layer protocol data unit (A-PPDU) to the transmitting STA based on the trigger frame,
wherein the trigger frame includes a common information field, first and second special user information fields, and first and second user information list fields,
wherein the A-PPDU includes a first PPDU for a primary channel and a second PPDU for a secondary channel,
wherein the first special user information field and the first user information list field are variant fields for the first PPDU,
wherein the second special user information field and the second user information list field are variant fields for the second PPDU,
wherein the first user information list field includes first and second user information fields,
wherein the first user information field is a user information field for at least one receiving STA to which the first PPDU is allocated,
wherein the second user information field is the last user information field located after the first user information field, and
wherein based on an Association Identifier (AID) of the second user information field being set to 4095, the second user information field includes information that there is no longer a user information field in the variant field for the first PPDU.

2. The method of claim 1, wherein the second user information list field includes third and fourth user information fields,
wherein the third user information field is a user information field for at least one receiving STA to which the second PPDU is allocated,
wherein the fourth user information field is the last user information field after the third user information field, and
wherein based on an AID of the fourth user information field being set to 4095, the fourth user information field includes information that there is no longer a user information field in the variant field for the second PPDU.

3. The method of claim 2, wherein the trigger frame is composed of the common information field, the first special user information field, the first user information list field, the second special user information field, and the second user information list field in that order,
wherein the first PPDU is an Extreme High Throughput (EHT) Trigger Based (TB) PPDU, and
wherein the second PPDU is an Ultra High Reliability (UHR) TB PPDU.

4. The method of claim 3, wherein based on the receiving STA being an EHT non-AP STA, further comprising:
not decoding the second special user information field and the second user information list field after decoding the second user information field,
wherein an AID of the user information field for the at least one receiving STA to which the first PPDU is allocated includes an AID of the EHT non-AP STA.

5. The method of claim 3, wherein based on the receiving STA being an UHR non-AP STA, further comprising:
decoding the second special user information field and the second user information list field even if the receiving STA decodes the second user information field,
wherein an AID of the user information field for the at least one receiving STA to which the first PPDU is allocated does not include an AID of the UHR non-AP STA.

6. The method of claim 3, wherein the common information field includes B54 bit and B55 bit, and
wherein based on the B54 bit being set to 1 and the B55 bit being set to 0, the trigger frame is set as a frame that triggers the A-PPDU.

7. The method of claim 1, wherein AIDs of the first and second special user information fields are set to 2007,
wherein based on a PHY (Physical) version identifier field of the first special user information field being set to 0, the first special user information field includes information indicating that it is the variant field for the first PPDU, and
wherein based on a PHY version identifier field of the second special user information field being set to one of 1 or more values, the second special user information field includes information indicating that it is the variant field for the second PPDU.

8. The method of claim 1, wherein based on the AID of the second user information field being set to 2046, the second user information field includes information that there are no more Resource Units (RUs) or subchannels allocated for the first PPDU,
wherein the second user information field includes an RU allocation field,
wherein the RU allocation field includes allocation information for remaining RUs or subchannels excluding the RUs or subchannels to which the first PPDU is allocated in a bandwidth of the A-PPDU.

9. A receiving station (STA) in a wireless local area network (WLAN) system, the receiving STA comprising:
a memory;
a transceiver; and
a processor being operatively connected to the memory and the transceiver,
wherein the processor is configured to:
receive a trigger frame from a transmitting STA; and
transmit an Aggregated-Physical layer protocol data unit (A-PPDU) to the transmitting STA based on the trigger frame,
wherein the trigger frame includes a common information field, first and second special user information fields, and first and second user information list fields,
wherein the A-PPDU includes a first PPDU for a primary channel and a second PPDU for a secondary channel,
wherein the first special user information field and the first user information list field are variant fields for the first PPDU,
wherein the second special user information field and the second user information list field are variant fields for the second PPDU,
wherein the first user information list field includes first and second user information fields,
wherein the first user information field is a user information field for at least one receiving STA to which the first PPDU is allocated,
wherein the second user information field is the last user information field located after the first user information field, and
wherein based on an Association Identifier (AID) of the second user information field being set to 4095, the second user information field includes information that there is no longer a user information field in the variant field for the first PPDU.

10. A method in a wireless local area network (WLAN) system, the method comprising:
transmitting, by a transmitting station (STA), a trigger frame to a receiving STA; and
receiving, by the transmitting STA, an Aggregated-Physical layer protocol data unit (A-PPDU) from the receiving STA based on the trigger frame,
wherein the trigger frame includes a common information field, first and second special user information fields, and first and second user information list fields,
wherein the A-PPDU includes a first PPDU for a primary channel and a second PPDU for a secondary channel,
wherein the first special user information field and the first user information list field are variant fields for the first PPDU,
wherein the second special user information field and the second user information list field are variant fields for the second PPDU,
wherein the first user information list field includes first and second user information fields,
wherein the first user information field is a user information field for at least one receiving STA to which the first PPDU is allocated,
wherein the second user information field is the last user information field located after the first user information field, and
wherein based on an Association Identifier (AID) of the second user information field being set to 4095, the second user information field includes information that there is no longer a user information field in the variant field for the first PPDU.

11. The method of claim 10, wherein the second user information list field includes third and fourth user information fields,
wherein the third user information field is a user information field for at least one receiving STA to which the second PPDU is allocated,
wherein the fourth user information field is the last user information field after the third user information field, and
wherein based on an AID of the fourth user information field being set to 4095, the fourth user information field includes information that there is no longer a user information field in the variant field for the second PPDU.

12. The method of claim 11, wherein the trigger frame is composed of the common information field, the first special user information field, the first user information list field, the second special user information field, and the second user information list field in that order,
wherein the first PPDU is an Extreme High Throughput (EHT) Trigger Based (TB) PPDU, and
wherein the second PPDU is an Ultra High Reliability (UHR) TB PPDU.

13. The method of claim 12, wherein the common information field includes B54 bit and B55 bit, and
wherein based on the B54 bit being set to 1 and the B55 bit being set to 0, the trigger frame is set as a frame that triggers the A-PPDU.

14. The method of claim 10, wherein AIDs of the first and second special user information fields are set to 2007,
wherein based on a PHY (Physical) version identifier field of the first special user information field being set to 0, the first special user information field includes information indicating that it is the variant field for the first PPDU, and
wherein based on a PHY version identifier field of the second special user information field being set to one of 1 or more values, the second special user information field includes information indicating that it is the variant field for the second PPDU.

15. The method of claim 10, wherein based on the AID of the second user information field being set to 2046, the second user information field includes information that there are no more Resource Units (RUs) or subchannels allocated for the first PPDU,
wherein the second user information field includes an RU allocation field,
wherein the RU allocation field includes allocation information for remaining RUs or subchannels excluding the RUs or subchannels to which the first PPDU is allocated in a bandwidth of the A-PPDU.

16. A transmitting station (STA) in a wireless local area network (WLAN) system, the transmitting STA comprising:
a memory;
a transceiver; and
a processor being operatively connected to the memory and the transceiver,
wherein the processor is configured to:
transmit a trigger frame to a receiving STA; and
receive an Aggregated-Physical layer protocol data unit (A-PPDU) from the receiving STA based on the trigger frame,
wherein the trigger frame includes a common information field, first and second special user information fields, and first and second user information list fields,
wherein the A-PPDU includes a first PPDU for a primary channel and a second PPDU for a secondary channel,
wherein the first special user information field and the first user information list field are variant fields for the first PPDU,
wherein the second special user information field and the second user information list field are variant fields for the second PPDU,
wherein the first user information list field includes first and second user information fields,
wherein the first user information field is a user information field for at least one receiving STA to which the first PPDU is allocated,
wherein the second user information field is the last user information field located after the first user information field, and
wherein based on an Association Identifier (AID) of the second user information field being set to 4095, the second user information field includes information that there is no longer a user information field in the variant field for the first PPDU.

17. A computer readable medium including an instruction being executed by at least one processor and performing a method comprising the steps of:
receiving a trigger frame from a transmitting station (STA); and
transmitting an Aggregated-Physical layer protocol data unit (A-PPDU) to the transmitting STA based on the trigger frame,
wherein the trigger frame includes a common information field, first and second special user information fields, and first and second user information list fields,
wherein the A-PPDU includes a first PPDU for a primary channel and a second PPDU for a secondary channel,
wherein the first special user information field and the first user information list field are variant fields for the first PPDU,
wherein the second special user information field and the second user information list field are variant fields for the second PPDU,
wherein the first user information list field includes first and second user information fields,
wherein the first user information field is a user information field for at least one receiving STA to which the first PPDU is allocated,
wherein the second user information field is the last user information field located after the first user information field, and
wherein based on an Association Identifier (AID) of the second user information field being set to 4095, the second user information field includes information that there is no longer a user information field in the variant field for the first PPDU.

18. A device in a wireless local area network (WLAN) system, the device comprising:
a memory; and
a processor being operatively connected to the memory,
wherein the processor is configured to:
receive a trigger frame from a transmitting station (STA); and
transmit an Aggregated-Physical layer protocol data unit (A-PPDU) to the transmitting STA based on the trigger frame,
wherein the trigger frame includes a common information field, first and second special user information fields, and first and second user information list fields,
wherein the A-PPDU includes a first PPDU for a primary channel and a second PPDU for a secondary channel,
wherein the first special user information field and the first user information list field are variant fields for the first PPDU,
wherein the second special user information field and the second user information list field are variant fields for the second PPDU,
wherein the first user information list field includes first and second user information fields,
wherein the first user information field is a user information field for at least one receiving STA to which the first PPDU is allocated,
wherein the second user information field is the last user information field located after the first user information field, and
wherein based on an Association Identifier (AID) of the second user information field being set to 4095, the second user information field includes information that there is no longer a user information field in the variant field for the first PPD
